# EUROPEAN PATENT APPLICATION

(11) **EP 4 271 011 A1**
(43) Date of publication of application: **01.11.2023**
(21) Application number: 21916833.3
(22) Date of filing: 08.01.2021
(51) Int. Cl.: H04W 12/00, H04W 12/10, H04W 12/04, H04W 36/00

(54) **SECURITY POLICY PROCESSING METHOD AND COMMUNICATION DEVICE**

(71) Applicant: Huawei Technologies Co., Ltd., Shenzhen, Guangdong 518129 (CN)
(72) Inventor: HU, Li, Shenzhen, Guangdong 518129 (CN); WU, Rong, Shenzhen, Guangdong 518129 (CN)
(74) Representative: Pfenning, Meinig & Partner mbB
(86) International application number: PCT/CN2021/070916
(87) International publication number: WO 2022/147777

(57) **Abstract**

Embodiments of this application provide a security policy processing method and a communication device, applied to a process such as handover, RRC connection resume, or RRC connection reestablishment, to reduce a probability that a mobility management entity sends, to an access network device, an information element that is not required by the access network device, reduce transmission complexity, and improve data transmission efficiency. A target access network device receives, from a source access network device, a message 001 that includes indication information 011. Then, when the indication information 011 indicates that a terminal device supports on-demand user plane security protection between the terminal device and an access network device, the target access network device sends, to a mobility management entity, a path switch request 031 that carries a user plane security policy 021, where the user plane security policy 021 indicates whether to enable user plane ciphering protection and/or whether to enable user plane integrity protection.

## Description

### TECHNICAL FIELD

Embodiments of this application relate to the communication field, and in particular, to a security policy processing method and a communication device.

### BACKGROUND

An on-demand user plane security protection mechanism is a security mechanism in a fifth-generation mobile communication technology (5th generation mobile communication technology, 5G) network, and the on-demand user plane security protection includes user plane ciphering protection and user plane integrity protection. The on-demand user plane security protection mechanism requires that an access network device determine, according to a user plane security policy received from a core network device, whether to enable user plane ciphering protection and/or integrity protection for a terminal device.

Currently, the on-demand user plane security protection mechanism needs to be applied to a fourth-generation mobile communication technology (the 4th generation mobile communication technology, 4G) network. The 4G network includes an unupgraded access network device and an unupgraded terminal device, and the unupgraded access network device and the unupgraded terminal device do not support on-demand user plane security protection. Therefore, when receiving an information element related to on-demand user plane security protection (for example, a user plane security policy), the unupgraded access network device and the unupgraded terminal device may not be able to identify the information element related to on-demand user plane security protection, and therefore discard or fail to process the information element.

How to implement the on-demand user plane security protection mechanism in the 4G network including both an upgraded access network device/terminal device and an unupgraded access network device/terminal device is an issue that urgently needs to be addressed in a current standard.

### SUMMARY

Embodiments of this application provide a security policy processing method and a communication device, to reduce a probability that a mobility management entity sends, to an access network device, an information element that is not required by the access network device, reduce transmission complexity, and improve data transmission efficiency.

According to a first aspect, an embodiment of this application provides a security policy processing method. For example, the security policy processing method may be applied to a process such as handover (Handover), radio resource control connection resume (Radio Resource Control Connection Resume, RRC Connection Resume), RRC connection reestablishment (RRC Connection Reestablishment), or the like. In the method, a target access network device receives a message 001 from a source access network device, where the message 001 includes indication information 011. Then, when the indication information 011 indicates that a terminal device supports on-demand user plane security protection between the terminal device and an access network device, the target access network device sends, to a mobility management entity, a path switch request 031 that carries a user plane security policy 021, where the user plane security policy 021 indicates whether to enable user plane ciphering protection and/or whether to enable user plane integrity protection.

In a possible implementation, the source access network device may be an access network device that provides a service for the terminal device during initial access of the terminal device, or the source access network device is an access network device that provides a service for the terminal device before the handover, RRC connection resume, or RRC connection reestablishment process is performed. The target access network device is an access network device that provides a service for the terminal device after the handover, RRC connection resume, or RRC connection reestablishment process is performed. Usually, a context of the terminal device is transmitted between the source access network device and the target access network device.

In this application, the target access network device can determine, based on the indication information 011, whether the terminal device supports on-demand user plane security protection, and the target access network device sends the user plane security policy 021 to the mobility management entity only when the terminal device supports on-demand user plane security protection. This avoids the following case: When the terminal device does not support on-demand user plane security protection and the mobility management entity does not receive a user plane security policy from the target access network device, the mobility management entity sends a user plane security policy to the target access network device, and consequently, the target access network device cannot enable on-demand user plane security protection for the terminal device even if the target access network device receives the user plane security policy. Therefore, this helps reduce a probability that the mobility management entity sends, to the target access network device, an information element that is not required by the target access network device, and therefore helps reduce transmission complexity.

In an optional implementation, the target access network device and the source access network device are evolved NodeBs eNBs. For example, the target access network device is a target eNB, and the source access network device is a source eNB.

In an optional implementation, when the target access network device does not receive a user plane security policy from the source access network device, the user plane security policy 021 is a user plane security policy 021-1 constructed by the target access network device.

In an optional implementation, the method further includes: The target access network device determines that a user plane security activation status between the target access network device and the terminal device is that user plane ciphering protection is enabled and user plane integrity protection is not enabled; and the target access network device constructs the user plane security policy 021-1 that matches the user plane security activation status.

The target access network device does not receive an on-demand user plane security protection policy from the source access network device, but the indication information 011 indicates that the terminal device supports on-demand user plane security protection. This indicates that the source access network device does not support on-demand user plane security protection. In this case, the target access network device may determine, in a default manner (which may be understood as an unupgraded manner), whether to enable user plane ciphering protection and/or user plane integrity protection for the terminal device. For example, the default manner (or the unupgraded manner) may indicate to enable user plane ciphering protection and skip enabling user plane integrity protection for the terminal device. Therefore, if the user plane security policy 021-1 constructed by the target access network device can match the user plane security activation status of the terminal device, when the target access network device receives a user plane security policy that is consistent with the user plane security policy 021-1, the target access network device may not reactivate the terminal device.

In an optional implementation, the user plane security policy 021-1 includes a user plane ciphering protection policy and a user plane integrity protection policy, where the user plane ciphering protection policy indicates that enabling is required or enabling is preferred, and the user plane integrity protection policy indicates that enabling is not needed or enabling is preferred.

In this implementation, a possible implementation of the user plane security policy 021-1 is provided. For example, if a user plane security policy is expressed in a form of {user plane ciphering protection policy, user plane integrity protection policy}, the user plane security policy 021-1 may be specifically implemented in any one of the following manners: { enabling is required (required), enabling is not needed (not needed)}; {enabling is required (required), enabling is preferred (preferred)}; {enabling is preferred (preferred), enabling is not needed (not needed)}; or { enabling is preferred (preferred), enabling is preferred (preferred)}.

In an optional implementation, when the target access network device does not receive a user plane security policy from the source access network device, the user plane security policy 021 may be a user plane security policy 021-2 preconfigured on the target access network device.

In this implementation, when the indication information 011 indicates that the terminal device supports on-demand user plane security protection, but the target access network device does not receive a user plane security policy from the source access network device, the target access network device may determine, according to a locally preconfigured user plane security policy, a user plane security policy corresponding to the terminal device.

In an optional implementation, the message 001 further includes identifiers of N evolved radio access bearers (E-UTRAN radio access bearer, E-RAB) of the terminal device, where N is an integer greater than or equal to 1; and the path switch request 031 further includes the identifiers of the N E-RABs.

In this implementation, the user plane security policy 021 may be a security policy at a bearer granularity, for example, a security policy at an E-RAB granularity. Specifically, an identifier of an E-RAB and a user plane security policy 021 corresponding to the E-RAB may be carried in a path switch request and sent to the mobility management entity. Correspondingly, when the mobility management entity receives the user plane security policy 021 and the identifier of the E-RAB, the mobility management entity may determine that the user plane security policy 021 is a security policy at an E-RAB granularity, and the user plane security policy 021 is a user plane security policy corresponding to the identifier of the E-RAB. In this implementation, the access network device may determine, for each E-RAB corresponding to the terminal device, whether to enable user plane ciphering protection and/or integrity protection. This facilitates fine-grained management of a user plane security policy.

In an optional implementation, the path switch request 031 includes N user plane security policies 021-2, and each of the identifiers of the N evolved radio access bearers corresponds to one of the N user plane security policies 021-2. In this implementation, when the target access network device receives the identifiers of the N E-RABs from the source access network device, the target access network device adds N correspondences to the path switch request 031 sent to the mobility management entity, and each correspondence includes an identifier of one E-RAB and one user plane security policy 021-2. In this case, a mobility management device in a live network can learn of a user plane security policy corresponding to an identifier of each E-RAB, without a change to the mobility management entity.

In an optional implementation, after the target access network device sends, to the mobility management entity, the path switch request 031 that carries the user plane security policy 021, the method further includes: The target access network device receives a path switch response 041 from the mobility management entity, where the path switch response 041 carries a user plane security policy 022; and the target access network device stores the user plane security policy 022 in a context of the terminal device.

In this implementation, if the target access network device sends the user plane security policy 021 to the mobility management entity but receives the user plane security policy 022, it indicates that the user plane security policy 022 on the mobility management entity is inconsistent with the mobility management entity 021 stored on the target access network device. Therefore, the target access network device needs to update, by using the user plane security policy 022, the user plane security policy 021 stored in the context of the terminal device.

In an optional implementation, the method further includes: If a current user plane security activation status of the terminal device does not match the user plane security policy 022, the target access network device re-enables or skips enabling user plane ciphering protection and/or user plane integrity protection for the terminal device according to the user plane security policy 022, where the current user plane security activation status is a status of whether user plane ciphering protection and/or user plane integrity protection are currently enabled between the target access network device and the terminal device. For example, user plane ciphering protection is currently enabled between the target access network device and the terminal device but integrity protection is not enabled, and the user plane security policy 022 indicates that user plane ciphering protection needs to be enabled (required) and user plane integrity protection also needs to be enabled (required). In this case, the target access network device needs to enable user plane ciphering protection and user plane integrity protection between the target access network device and the terminal device according to a requirement of the user plane security policy 022.

In an optional implementation, the method further includes: When the indication information 011 indicates that the terminal device does not support on-demand user plane security protection between the terminal device and an access network device, the target access network device sends, to the mobility management entity, a path switch request 032 that carries no user plane security policy; and the target access network device receives, from the mobility management entity, a path switch response 042 that carries no user plane security policy.

In the conventional technology, after a mobility management entity receives a path switch request that carries no user plane security policy, the mobility management entity sends a user plane security policy to a target access network device to enable user plane integrity protection between an access network device and a terminal device in a 4G network. In this case, the target access network device and the terminal device may not be able to use the user plane security policy.

However, in this implementation, when the indication information 011 indicates that the terminal device supports on-demand user plane security protection, the target access network device sends the constructed user plane security policy 021-1 or the preconfigured user plane security policy 021-2 to the mobility management entity. Therefore, it can be learned that, if the indication information 011 indicates that the terminal device does not support on-demand user plane security protection, the target access network device does not send a user plane security policy to the mobility management entity, and correspondingly, the mobility management entity cannot receive a user plane security policy from the target access network device. In this case, the mobility management entity may infer that the terminal device does not support on-demand user plane security protection, and even if a user plane security policy is provided for the target access network device, the target access network device cannot enable user plane integrity protection for the terminal device by using the user plane security policy. Therefore, in this implementation, the mobility management entity is configured to: when receiving a path switch request that carries no user plane security policy, send, to the target access network device, a path switch response that carries no user plane security policy, that is, not provide a user plane security policy for the target access network device. Therefore, a probability that the target access network device receives an information element that cannot be used is reduced, and complexity of data transmission between the target access network device and the mobility management entity is reduced.

In an optional implementation, the method further includes: When the indication information 011 indicates that the terminal device does not support on-demand user plane security protection between the terminal device and an access network device, the target access network device sends, to the mobility management entity, a path switch request 033 that carries no user plane security policy, where the path switch request 033 carries the indication information 011; the target access network device receives, from the mobility management entity, a path switch response 043 that carries a user plane security policy 023; and the target access network device stores the user plane security policy 023 in a context of the terminal device.

In an optional implementation, the path switch response 043 carrying the user plane security policy 023 further carries indication information 012, and the indication information 012 indicates that the terminal device supports on-demand user plane security protection between the terminal device and an access network device.

In this implementation, if the source access network device is malicious, the source access network device may maliciously tamper with the indication information 011, to make the indication information 011 indicate that the terminal device does not support on-demand user plane security protection. Consequently, the target access network device cannot send a security policy to the mobility management entity, and cannot enable security protection for the terminal device. This causes a degradation attack. Therefore, after determining not to send a user plane security policy to the mobility management device, the target access network device may additionally send the indication information 011, so that the mobility management entity can determine whether the indication information 011 is tampered with. After determining that the indication information 011 is tampered with, the mobility management entity sends a user plane security policy to the target access network device. This can avoid the degradation attack.

In an optional implementation, the method further includes: When the indication information 011 indicates that the terminal device does not support on-demand user plane security protection between the terminal device and an access network device, the target access network device sends, to the mobility management entity, a path switch request 035 that carries no user plane security policy, where the path switch request 035 carries the indication information 011; and the target access network device receives, from the mobility management entity, a path switch response 045 that carries no user plane security policy or indication information.

In this implementation, after the target access network device sends the indication information 011 to the mobility management entity, if the path switch response 045 received by the target access network device carries no user plane security policy, it indicates that the indication information 011 is consistent with indication information stored on the mobility management entity, and the indication information 011 received by the target access network device is not tampered with. Therefore, this helps avoid a degradation attack against communication between the target access network device and the mobility management entity.

In an optional implementation, the method further includes: If a current user plane security activation status of the terminal device does not match the user plane security policy 023, the target access network device enables or skips enabling user plane ciphering protection and/or user plane integrity protection for the terminal device according to the user plane security policy 023, where the current user plane security activation status is a status of whether user plane ciphering protection and/or user plane integrity protection are currently enabled between the target access network device and the terminal device.

In an optional implementation, when any one of the following conditions is met, the user plane security policy does not match the user plane security activation status:
the user plane ciphering protection policy indicates that enabling is required, and the user plane security activation status of the terminal device is that ciphering protection is not enabled;
the user plane ciphering protection policy indicates that enabling is not needed, and the user plane security activation status of the terminal device is that ciphering protection is enabled;
the user plane integrity protection policy indicates that enabling is required, and the user plane security activation status of the terminal device is that integrity protection is not enabled; or
the user plane integrity protection policy indicates that enabling is not needed, and the user plane security activation status of the terminal device is that integrity protection is enabled.

In an optional implementation, the indication information 011 is represented by a part of bits of an evolved packet system security capability of the terminal device, and the evolved packet system security capability of the terminal device indicates at least one security algorithm supported by the terminal device.

In this implementation, regardless of whether an access network device is upgraded (to be specific, whether the access network device supports on-demand user plane security protection), the access network device can identify and forward the evolved packet system security capability of the terminal device (for example, a UE evolved packet system security capability). Therefore, adding the indication information 011 to the evolved packet system security capability of the terminal device can ensure that the indication information 011 is not lost during transmission between access network devices (for example, between an access network device that supports on-demand user plane security protection and an access network device that does not support on-demand user plane security protection) or between an access network device and a core network device (between an access network device that does not support on-demand user plane security protection and the mobility management entity). However, in the conventional technology, redefined indication information indicates whether a terminal device supports on-demand user plane security protection, and the redefined indication information cannot be identified by an unupgraded access network device. To be specific, an access network device that does not support on-demand user plane security protection cannot identify the redefined indication information. If the access network device that does not support on-demand user plane security protection receives the redefined indication information, the access network device that does not support on-demand user plane security protection discards the redefined indication information, and cannot send the redefined indication information to another access network device or a core network device (for example, a mobility management entity).

In an optional implementation, the message 001 is a handover request or a context retrieve response.

According to a second aspect, an embodiment of this application provides a communication device, including a receiving module, a processing module, and a sending module. The receiving module is configured to receive a message 001 from a source access network device, where the message 001 includes indication information 011. The processing module is configured to: when the indication information 011 indicates that a terminal device supports on-demand user plane security protection between the terminal device and an access network device, control the sending module to send, to a mobility management entity, a path switch request 031 that carries a user plane security policy 021, where the user plane security policy 021 indicates whether to enable user plane ciphering protection and/or whether to enable user plane integrity protection.

In an optional implementation, the access network device is an evolved NodeB eNB.

In an optional implementation, when the communication device does not receive a user plane security policy from the source access network device, the user plane security policy 021 is a user plane security policy 021-1 constructed by the communication device.

In an optional implementation, the processing module is further configured to: determine that a user plane security activation status between the access network device and the terminal device is that user plane ciphering protection is enabled and user plane integrity protection is not enabled; and construct the user plane security policy 021-1 that matches the user plane security activation status.

In an optional implementation, the user plane security policy 021-1 includes a user plane ciphering protection policy and a user plane integrity protection policy, where the user plane ciphering protection policy indicates that enabling is required or enabling is preferred, and the user plane integrity protection policy indicates that enabling is not needed or enabling is preferred.

In an optional implementation, when the communication device does not receive a user plane security policy from the source access network device, the user plane security policy 021 is a user plane security policy 021-2 preconfigured on the communication device.

In an optional implementation, the message 001 further includes identifiers of N evolved radio access bearers of the terminal device, where N is an integer greater than or equal to 1; and the path switch request 031 further includes the identifiers of the N evolved radio access bearers.

In an optional implementation, the path switch request 031 includes N user plane security policies 021-2, and each of the identifiers of the N evolved radio access bearers corresponds to one user plane security policy 021-2.

In an optional implementation, the receiving module is further configured to receive a path switch response 041 from the mobility management entity, where the path switch response 041 carries a user plane security policy 022; and the communication device further includes a storage module, where the storage module is configured to store the user plane security policy 022 in a context of the terminal device.

In an optional implementation, the processing module is further configured to: when a current user plane security activation status of the terminal device does not match the user plane security policy 022, enable or skip enabling user plane ciphering protection and/or user plane integrity protection for the terminal device according to the user plane security policy 022, where the current user plane security activation status is a status of whether user plane ciphering protection and/or user plane integrity protection are currently enabled between a target access network device and the terminal device.

In an optional implementation, the sending module is further configured to: when the indication information 011 indicates that the terminal device does not support on-demand user plane security protection between the terminal device and an access network device, send, to the mobility management entity, a path switch request 032 that carries no user plane security policy; and the receiving module is further configured to receive, from the mobility management entity, a path switch response 042 that carries no user plane security policy.

In an optional implementation, the sending module is further configured to: when the indication information 011 indicates that the terminal device does not support on-demand user plane security protection between the terminal device and an access network device, send, to the mobility management entity, a path switch request 033 that carries no user plane security policy, where the path switch request 033 carries the indication information 011; the receiving module is further configured to receive, from the mobility management entity, a path switch response 043 that carries a user plane security policy 023; and the communication device further includes a storage module, where the storage module is configured to store the user plane security policy 023 in a context of the terminal device.

In an optional implementation, the path switch response 043 carrying the user plane security policy 023 further carries indication information 012, and the indication information 012 indicates that the terminal device supports on-demand user plane security protection between the terminal device and an access network device.

In an optional implementation, the processing module is further configured to: when a current user plane security activation status of the terminal device does not match the user plane security policy 023, enable or skip enabling user plane ciphering protection and/or user plane integrity protection for the terminal device according to the user plane security policy 023, where the current user plane security activation status is a status of whether user plane ciphering protection and/or user plane integrity protection are currently enabled between a target access network device and the terminal device.

In an optional implementation, the indication information 011 is represented by a part of bits of an evolved packet system security capability of the terminal device, and the evolved packet system security capability of the terminal device indicates at least one security algorithm supported by the terminal device.

In an optional implementation, the message 001 is a handover request or a context retrieve response.

According to a third aspect, an embodiment of this application provides a security policy processing method. The security policy processing method may be applied to a process such as initial access, handover, RRC connection resume, or RRC connection reestablishment. In the method, a mobility management entity obtains indication information 013, where the indication information 013 indicates whether a terminal device supports on-demand user plane security protection between the terminal device and an access network device; and the mobility management entity determines, based on the indication information 013, whether to send a user plane security policy 024 to an access network device that provides a service for the terminal device, where the user plane security policy 024 indicates whether to enable user plane ciphering protection and/or whether to enable user plane integrity protection.

In this application, the mobility management entity can determine, based on the indication information 013, whether the terminal device supports on-demand user plane security protection; and when the terminal device supports on-demand user plane security protection, further determines whether to send a user plane security policy to the access network device that provides a service for the terminal device. Therefore, this also helps reduce a probability that the mobility management entity sends, to the access network device, an information element that is not required by the access network device, and therefore helps reduce transmission complexity. However, in the conventional technology, a mobility management entity does not have logic of performing determining based on indication information 013. In the conventional technology, the mobility management entity performs determining and decision-making based on whether a user plane security policy is received from an access network device. If the mobility management entity receives no user plane security policy from the access network device, the mobility management entity sends a user plane security policy to the access network device.

In an optional implementation, the indication information 013 is carried in a path switch request 034, and the access network device that provides a service for the terminal device is a target access network device. That the mobility management entity determines, based on the indication information 013, whether to send a user plane security policy 024 to an access network device that provides a service for the terminal device includes: When the indication information 013 indicates that the terminal device supports on-demand user plane security protection between the terminal device and an access network device, and the path switch request 034 carries no user plane security policy, the mobility management entity sends, to the target access network device, a path switch response 044 that carries the user plane security policy 024.

In an optional implementation, the indication information 013 is carried in a non-access stratum message, the access network device that provides a service for the terminal device is a source access network device, and that the mobility management entity determines, based on the indication information 013, whether to send a user plane security policy 024 to an access network device that provides a service for the terminal device includes: When the indication information 013 indicates that the terminal device supports on-demand user plane security protection between the terminal device and an access network device, the mobility management entity sends the user plane security policy 024 to the source access network device.

In an optional implementation, before the mobility management entity determines, based on the indication information 013, whether to send the user plane security policy 024 to the access network device that provides a service for the terminal device, the method further includes: The mobility management entity obtains indication information 051, where the indication information 051 indicates whether the access network device that provides a service for the terminal device supports on-demand user plane security protection between the access network device and the terminal device. That the mobility management entity determines, based on the indication information 013, whether to send a user plane security policy 024 to an access network device that provides a service for the terminal device includes: The mobility management entity determines, based on the indication information 013 and the indication information 051, whether to send the user plane security policy 024 to the access network device that provides a service for the terminal device.

In an optional implementation, the indication information 013 is carried in a path switch request, or the indication information 013 is carried in a non-access stratum message, and that the mobility management entity determines, based on the indication information 013 and the indication information 051, whether to send the user plane security policy 024 to the access network device that provides a service for the terminal device includes: When the indication information 013 indicates that the terminal device supports on-demand user plane security protection, and the indication information 051 indicates that the access network device that provides a service for the terminal device supports on-demand user plane security protection between the access network device and the terminal device, the mobility management entity sends the user plane security policy 024 to the access network device.

In an optional implementation, the indication information 051 is indication information 051-1 received by the mobility management entity from the access network device; or the indication information 051 is indication information 051-2 obtained by the mobility management entity from a network management device.

In an optional implementation, after the mobility management entity obtains the indication information 013, the method further includes: The mobility management entity receives subscription data of the terminal device from a home subscriber server; and when the indication information 013 indicates that the terminal device supports on-demand user plane security protection, and the subscription data includes the user plane security policy 024, the mobility management entity stores the user plane security policy 024.

In an optional implementation, after the mobility management entity obtains the indication information 013, the method further includes: The mobility management entity receives subscription data of the terminal device from a home subscriber server; and when the indication information 013 indicates that the terminal device supports on-demand user plane security protection between the terminal device and an access network device, and the subscription data does not include a user plane security policy, the mobility management entity determines the user plane security policy 024 according to a preconfigured user plane security policy 024-1, and stores the user plane security policy 024 in a context of the terminal device.

In an optional implementation, after the mobility management entity obtains the indication information 051, the method further includes: The mobility management entity receives subscription data of the terminal device from a home subscriber server; and when the indication information 013 indicates that the terminal device supports on-demand user plane security protection between the terminal device and an access network device, the indication information 051 indicates that the access network device supports on-demand user plane security protection between the access network device and the terminal device, and the subscription data includes the user plane security policy 024, the mobility management entity stores the user plane security policy 024.

In an optional implementation, after the mobility management entity obtains the indication information 051, the method further includes: The mobility management entity receives subscription data of the terminal device from a home subscriber server; and when the indication information 013 indicates that the terminal device supports on-demand user plane security protection between the terminal device and an access network device, the indication information 051 indicates that the access network device supports on-demand user plane security protection between the access network device and the terminal device, and the subscription data does not include a user plane security policy, the mobility management entity determines the user plane security policy 024 according to a preconfigured user plane security policy 024-2, and stores the user plane security policy 024 in a context of the terminal device.

In an optional implementation, the indication information 013 is represented by a part of bits of an evolved packet system security capability of the terminal device, and the evolved packet system security capability of the terminal device indicates at least one security algorithm supported by the terminal device.

According to a fourth aspect, an embodiment of this application provides a communication device, including a processing module, configured to: obtain indication information 013, where the indication information 013 indicates whether a terminal device supports on-demand user plane security protection between the terminal device and an access network device; and determine, based on the indication information 013, whether to send a user plane security policy 024 to an access network device that provides a service for the terminal device, where the user plane security policy 024 indicates whether to enable user plane ciphering protection and/or whether to enable user plane integrity protection.

In an optional implementation, the indication information 013 is carried in a path switch request 034, the access network device that provides a service for the terminal device is a target access network device, and the processing module is specifically configured to: when the indication information 013 indicates that the terminal device supports on-demand user plane security protection between the terminal device and an access network device, and the path switch request 034 carries no user plane security policy, control a transceiver module to send, to the target access network device, a path switch response 044 that carries the user plane security policy 024.

In an optional implementation, the indication information 013 is carried in a non-access stratum message, the access network device that provides a service for the terminal device is a source access network device, and the processing module is specifically configured to: when the indication information 013 indicates that the terminal device supports on-demand user plane security protection between the terminal device and an access network device, control the transceiver module to send the user plane security policy 024 to the source access network device.

In an optional implementation, the processing module is further configured to:
obtain indication information 051, where the indication information 051 indicates whether the access network device that provides a service for the terminal device supports on-demand user plane security protection between the access network device and the terminal device; and
determine, based on the indication information 013 and the indication information 051, whether to control the transceiver module to send the user plane security policy 024 to the access network device that provides a service for the terminal device.

In an optional implementation, the indication information 013 is carried in a path switch request, or the indication information 013 is carried in a non-access stratum message; and
when the indication information 013 indicates that the terminal device supports on-demand user plane security protection, and the indication information 051 indicates that the access network device that provides a service for the terminal device supports on-demand user plane security protection between the access network device and the terminal device, the transceiver module is controlled to send the user plane security policy 024 to the access network device.

In an optional implementation, the indication information 051 is indication information 051-1 received by a mobility management entity from the access network device; or the indication information 051 is indication information 051-2 obtained by the mobility management entity from a network management device.

In an optional implementation, the transceiver module is configured to receive subscription data of the terminal device from a home subscriber server; and when the indication information 013 indicates that the terminal device supports on-demand user plane security protection, and the subscription data includes the user plane security policy 024, a storage module stores the user plane security policy 024.

In an optional implementation, the transceiver module is configured to receive subscription data of the terminal device from a home subscriber server; and when the indication information 013 indicates that the terminal device supports on-demand user plane security protection between the terminal device and an access network device, and the subscription data does not include a user plane security policy, the processing module determines the user plane security policy 024 according to a preconfigured user plane security policy 024-1, and stores the user plane security policy 024 in a context of the terminal device.

In an optional implementation, the transceiver module is configured to receive subscription data of the terminal device from a home subscriber server; and when the indication information 013 indicates that the terminal device supports on-demand user plane security protection between the terminal device and an access network device, the indication information 051 indicates that the access network device supports on-demand user plane security protection between the access network device and the terminal device, and the subscription data includes the user plane security policy 024, the storage module stores the user plane security policy 024.

In an optional implementation, the transceiver module is configured to receive subscription data of the terminal device from a home subscriber server; and when the indication information 013 indicates that the terminal device supports on-demand user plane security protection between the terminal device and an access network device, the indication information 051 indicates that the access network device supports on-demand user plane security protection between the access network device and the terminal device, and the subscription data does not include a user plane security policy, the processing module determines the user plane security policy 024 according to a preconfigured user plane security policy 024-2, and stores the user plane security policy 024 in a context of the terminal device.

In an optional implementation, the indication information 013 is represented by a part of bits of an evolved packet system security capability of the terminal device, and the evolved packet system security capability of the terminal device indicates at least one security algorithm supported by the terminal device.

According to a fifth aspect, an embodiment of this application provides a communication device. The communication device may be the access network device in the foregoing implementations, or may be a chip in the access network device. The communication device may include a processing module and a transceiver module. When the communication device is the access network device, the processing module may be a processor, and the transceiver module may be a transceiver. The access network device may further include a storage module. The storage module may be a memory. The storage module is configured to store instructions. The processing module executes the instructions stored in the storage module, so that the access network device performs the method in any one of the first aspect or the implementations of the first aspect. When the communication device is a chip in the access network device, the processing module may be a processor, and the transceiver module may be an input/output interface, a pin, a circuit, or the like. The processing module executes instructions stored in a storage module, so that the access network device performs the method in any one of the first aspect or the implementations of the first aspect. The storage module may be a storage module (for example, a register or a cache) in the chip, or may be a storage module (for example, a read-only memory or a random access memory) that is in the access network device and that is located outside the chip.

According to a sixth aspect, an embodiment of this application provides a communication device. The communication device may be the mobility management entity in the foregoing implementations, or may be a chip in the mobility management entity. The communication device may include a processing module and a transceiver module. When the communication device is the mobility management entity, the processing module may be a processor, and the transceiver module may be a transceiver. The mobility management entity may further include a storage module. The storage module may be a memory. The storage module is configured to store instructions. The processing module executes the instructions stored in the storage module, so that the mobility management entity performs the method in any one of the third aspect or the implementations of the third aspect. When the communication device is a chip in the mobility management entity, the processing module may be a processor, and the transceiver module may be an input/output interface, a pin, a circuit, or the like. The processing module executes instructions stored in a storage module, so that the mobility management entity performs the method in any one of the third aspect or the implementations of the third aspect. The storage module may be a storage module (for example, a register or a cache) in the chip, or may be a storage module (for example, a read-only memory or a random access memory) that is in the mobility management entity and that is located outside the chip.

According to a seventh aspect, this application provides a communication apparatus. The apparatus may be an integrated circuit chip. The integrated circuit chip includes a processor. The processor is coupled to a memory. The memory is configured to store a program or instructions. When the program or instructions are executed by the processor, the communication apparatus is enabled to perform the method in any one of the first aspect or the implementations of the first aspect.

According to an eighth aspect, this application provides a communication apparatus. The apparatus may be an integrated circuit chip. The integrated circuit chip includes a processor. The processor is coupled to a memory. The memory is configured to store a program or instructions. When the program or instructions are executed by the processor, the communication device is enabled to perform the method in any one of the third aspect or the implementations of the third aspect.

According to a ninth aspect, an embodiment of this application provides a computer-readable storage medium, including instructions. When the instructions run on a computer, the computer is enabled to perform the method described in any one of the first aspect or the implementations of the first aspect.

According to a tenth aspect, an embodiment of this application provides a computer-readable storage medium, including instructions. When the instructions run on a computer, the computer is enabled to perform the method described in any one of the third aspect or the implementations of the third aspect.

According to an eleventh aspect, an embodiment of this application provides a computer program product including instructions. When the computer program product runs on a computer, the computer is enabled to perform the method described in any one of the first aspect or the implementations of the first aspect.

According to a twelfth aspect, an embodiment of this application provides a computer program product including instructions. When the computer program product runs on a computer, the computer is enabled to perform the method described in any one of the third aspect or the implementations of the third aspect.

According to a thirteenth aspect, an embodiment of this application provides a communication system. The communication system includes a mobility management entity and the target access network device in any one of the first aspect or the implementations of the first aspect.

In an optional implementation, the communication system further includes a source access network device and a terminal device.

According to a fourteenth aspect, an embodiment of this application provides a communication system. The communication system includes an access network device and the mobility management entity in any one of the third aspect or the implementations of the third aspect.

In an optional implementation, the communication system further includes a source access network device and a terminal device.

It can be learned from the foregoing technical solutions that embodiments of this application have the following advantages:

In embodiments of this application, the target access network device can determine, based on the indication information 011, whether the terminal device supports on-demand user plane security protection, and the target access network device sends the user plane security policy 021 to the mobility management entity only when the terminal device supports on-demand user plane security protection. This avoids the following case: When the terminal device does not support on-demand user plane security protection and the mobility management entity does not receive a user plane security policy from the target access network device, the mobility management entity sends a user plane security policy to the target access network device, and consequently, the target access network device cannot enable on-demand user plane security protection for the terminal device even if the target access network device receives the user plane security policy. Therefore, this helps reduce a probability that the mobility management entity sends, to the target access network device, an information element that is not required by the access network device, and therefore helps reduce transmission complexity.

In addition, the mobility management entity can determine, based on the indication information 013, whether the terminal device supports on-demand user plane security protection; and when the terminal device supports on-demand user plane security protection, further determines whether to send a user plane security policy to the access network device that provides a service for the terminal device. Therefore, this also helps reduce a probability that the mobility management entity sends, to the access network device, an information element that is not required by the access network device, and therefore helps reduce transmission complexity.

### BRIEF DESCRIPTION OF DRAWINGS

To describe technical solutions in embodiments of this application more clearly, the following briefly describes accompanying drawings for describing embodiments. Clearly, the accompanying drawings in the following descriptions show merely some embodiments of this application.
FIG. 1 is a diagram of an architecture of a 4G network to which a security policy processing method is applicable according to this application;
FIG. 2 is a schematic diagram of an embodiment of a security policy processing method according to this application;
FIG. 3A and FIG. 3B are an example diagram of a security policy processing method in a handover scenario according to this application;
FIG. 4 is a schematic diagram of another embodiment of a security policy processing method according to this application;
FIG. 5 is a schematic diagram of another embodiment of a security policy processing method according to this application;
FIG. 6A and FIG. 6B are an example diagram of a security policy processing method in an RRC connection resume scenario according to this application;
FIG. 7 is an example diagram of a security policy processing method in an access scenario according to this application;
FIG. 8 is a schematic diagram of an embodiment of a communication device according to this application;
FIG. 9 is a schematic diagram of another embodiment of a communication device according to this application;
FIG. 10 is a schematic diagram of another embodiment of a communication device according to this application; and
FIG. 11 is a schematic diagram of another embodiment of a communication device according to this application.

### DESCRIPTION OF EMBODIMENTS

The following clearly and completely describes technical solutions in embodiments of this application with reference to accompanying drawings in embodiments of this application. Clearly, the described embodiments are merely some but not all of embodiments of this application.

In the specification, claims, and accompanying drawings of this application, the terms "first", "second", "third", "fourth", and corresponding reference numerals (if existent) of the terms are intended to distinguish between similar objects but do not necessarily indicate a specific order or sequence. It should be understood that data used in this way is interchangeable in proper circumstances, so that embodiments described herein can be implemented in an order other than the order illustrated or described herein. In addition, the terms "comprise", "include", and any variants thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

Embodiments of this application provide a security policy processing method and a communication device, to reduce a probability that a mobility management entity sends, to an access network device, an information element that is not required by the access network device, reduce transmission complexity, and improve data transmission efficiency.

The following first describes a system architecture and an application scenario to which the security policy processing method provided in this application is applicable.

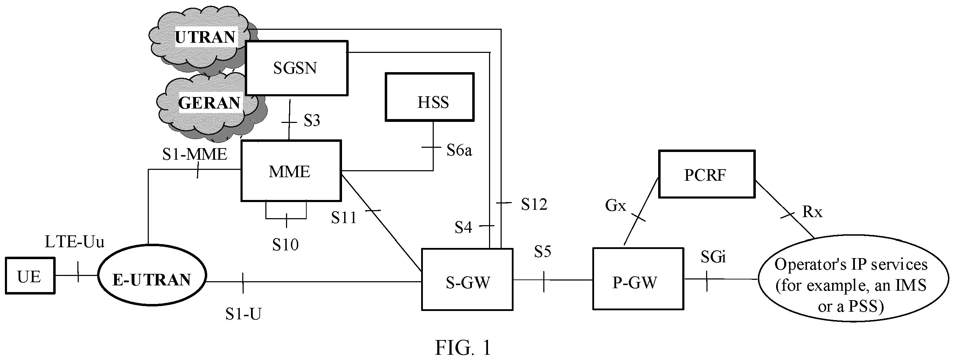

The security policy processing method provided in this application may be applied to a 4G network architecture. FIG. 1 shows a current long term evolution (long term evolution, LTE)/system architecture evolution (system architecture evolution, SAE) network architecture. A core network part mainly includes a mobility management entity (mobility management entity, MME), a serving gateway (serving gateway, SGW/S-GW), a packet data network gateway (packet data network gateway, PDN GW, PGW/P-GW), a home subscriber server (home subscriber server, HSS), a serving GPRS support node (serving GPRS support node, SGSN), a policy and charging rules function (policy and charging rules function, PCRF), operator's IP services (Operator's IP Services) (for example, an IP multimedia subsystem (IP multimedia subsystem, IMS) or a packet switching service (packet switching service, PSS)), and the like. The core network may be an evolved packet core (evolved packet core, EPC). In addition, FIG. 1 further includes an access network part, namely, an evolved UMTS terrestrial radio access network (evolution UMTS terrestrial radio access network, E-UTRAN). The access network part mainly includes an access network (radio access network, RAN) device. In addition, FIG. 1 further includes a terminal device, for example, user equipment (user equipment, UE).

The mobility management entity MME manages and stores a mobility management context of the terminal device (for example, an identifier of the terminal device, a mobility management status, and a user security parameter), processes non-access stratum (non-access stratum, NAS) signaling (for example, an attach request (attach request), a location update request (update location request), a service request (service request), and a packet data network connectivity request (PDN connectivity request)), and ensures security of the NAS signaling and the like.

The serving gateway S-GW is a gateway that terminates a user plane interface from the access network, and performs functions such as lawful interception and packet data routing. An interface between the serving gateway S-GW and the mobility management entity MME is an S 1 1 interface, and is used for exchanging session control information and the like of the terminal device.

The packet data network gateway P-GW is a gateway that terminates an SGi interface to a packet data network, is configured to provide functions such as bearer control, data forwarding, IP address allocation, and non-3GPP user access, and is an anchor for 3GPP access and non-3GPP access to a public data network (public data network, PDN). The P-GW has a packet routing and forwarding function, and performs a policy and charging enhancement function, a user-specific packet filtering function, and the like. The P-GW is connected to the S-GW through an S5 interface, to transmit control information for information establishment, modification, deletion, and the like, route packet data, and the like. In addition, the P-GW is further connected to the operator's IP services through the SGi interface.

The home subscriber server HSS is a core database that stores subscriber information in a home network of a subscriber. The HSS mainly includes a user profile, user subscription data, information related to user identity authentication and authorization, information related to a physical location of a user, and the like. The HSS is connected to the MME through an S6a interface, so that the MME can obtain information such as the user profile and the user subscription data from the HSS.

The policy and charging rules function PCRF is a policy and charging control policy decision point for service data flows and IP bearer resources, and may control user-mode and service-mode quality of service (quality of service, QoS), to provide differentiated services for users. The PCRF is connected to the P-GW through a Gx interface, and is connected to the operator's IP services through an Rx interface.

In addition, the MME is connected to the E-UTRAN through an S1-MME interface, and the S-GW is connected to the E-UTRAN and the MME through an S 1-U interface and the S11 interface respectively. In addition, the MME and the S-GW are connected to a 2G/3G network and the SGSN through an S3 interface and an S4 interface respectively, and respectively provide a mobility control plane anchor function and a mobility user plane anchor function for the terminal device in corresponding networks. In addition, the S-GW is further connected to the evolved universal terrestrial radio access network (evolved universal terrestrial radio access network, UTRAN) through an S12 interface.

The access network device is a bridge between the terminal device and a core network device, and is configured to manage radio resources, select an MME in an attach process, route a user data plane to the S-GW, and the like. The access network device in this application may be a 4G radio access network device, or may be a device that communicates, through one or more cells, with a wireless terminal device on an air interface in a 4G access network. For example, the access network device may be an evolved NodeB (evolutional node B, NodeB, eNB, or e-NodeB) in a long term evolution LTE system or an LTE-advanced (long term evolution advanced, LTE-A) system. It should be noted that the access network device in this application may be an upgraded access network device (for example, an access network device that supports on-demand user plane security protection) or an unupgraded access network device (for example, an access network device that does not support on-demand user plane security protection). In addition, based on different orders for providing services for the terminal device, access network devices in this application may be classified into a source access network device (source evolutional node B, S-eNB) and a target access network device (target evolutional node B, T-eNB). The source access network device may be an access network device that provides a service for the terminal device during initial access of the terminal device, or the source access network device is an access network device that provides a service for the terminal device before a handover, RRC connection resume, or RRC connection reestablishment process is performed. The target access network device is an access network device that provides a service for the terminal device after the handover, RRC connection resume, or RRC connection reestablishment process is performed. Usually, a context of the terminal device is transmitted between the source access network device and the target access network device. It should be understood that the access network device in embodiments of this application may be any one of the foregoing devices or a chip in the foregoing devices. This is not specifically limited herein. Regardless of being a device or a chip, the access network device can be manufactured, sold, or used as an independent product. In this embodiment and subsequent embodiments, the access network device is used as an example for description.

In addition, the terminal device includes a device that provides voice and/or data connectivity for a user. For example, the terminal device may include a handheld device with a wireless connection function, or a processing device connected to a wireless modem. The terminal device may communicate with a core network (for example, the mobility management entity MME) through a radio access network RAN (for example, the source access network device or the target access network device), and may exchange voice and/or data with the RAN. The terminal device may include user equipment UE, a wireless terminal device, a mobile terminal device, a subscriber unit (subscriber unit), a subscriber station (subscriber station), a mobile station (mobile station), a mobile (mobile) console, a remote station (remote station), an access point (access point, AP), a remote terminal (remote terminal) device, an access terminal (access terminal) device, a user terminal (user terminal) device, a user agent (user agent), a user device (user device), or the like. In addition, the terminal device may alternatively be a vehicle-mounted terminal, for example, a telematics box (telematics box, T-Box), a domain controller (domain controller, DC), a multi-domain controller (multi-domain controller, MDC), or an on-board unit (on-board unit, OBU) that are integrated in a vehicle. The terminal device may alternatively be a wearable device, such as glasses, gloves, a watch, clothing, or shoes, or another portable device that may be directly put on a body or integrated into clothes or an accessory of a user. This is not specifically limited in this application. It should be noted that the terminal device in this application may be an upgraded terminal device (for example, a terminal device that supports on-demand user plane security protection) or an unupgraded terminal device (for example, a terminal device that does not support on-demand user plane security protection). It should be understood that the terminal device in embodiments of this application may be any one of the foregoing devices or a chip. This is not specifically limited herein. Regardless of being a device or a chip, the terminal device can be manufactured, sold, or used as an independent product. In this embodiment and subsequent embodiments, only the terminal device is used as an example for description.

The foregoing 4G network architecture usually includes both an upgraded access network device (for example, an access network device that supports on-demand user plane security protection) and an unupgraded access network device (for example, an access network device that does not support on-demand user plane security protection). Currently, during application of the on-demand user plane security protection mechanism in the 4G network, to enable on-demand user plane security protection between the terminal device and the access network device that support on-demand user plane security protection, the mobility management entity in the 4G network is configured to always send a user plane security policy to an access network device that communicates with the mobility management entity. For example, when the mobility management entity does not receive a user plane security policy from the access network device, the mobility management entity returns a user plane security policy to the access network device.

In the foregoing conventional technical solution, although the access network device that supports on-demand user plane security protection can enable on-demand user plane security protection for the terminal device by using the foregoing information element, the access network device that does not support on-demand user plane security protection always receives an information element that cannot be used by the access network device. As a result, complexity of transmission between the mobility management entity and the access network device that does not support on-demand user plane security protection is increased, and transmission efficiency is affected.

In view of this, in the security policy processing method provided in this application, determining logic can be added on an access network device side and/or a mobility management entity side, to reduce a probability that a mobility management entity sends a user plane security policy to an access network device that does not support on-demand user plane security protection, while ensuring, to the maximum extent, that an access network device and a terminal device that support on-demand user plane security protection can receive a user plane security policy.

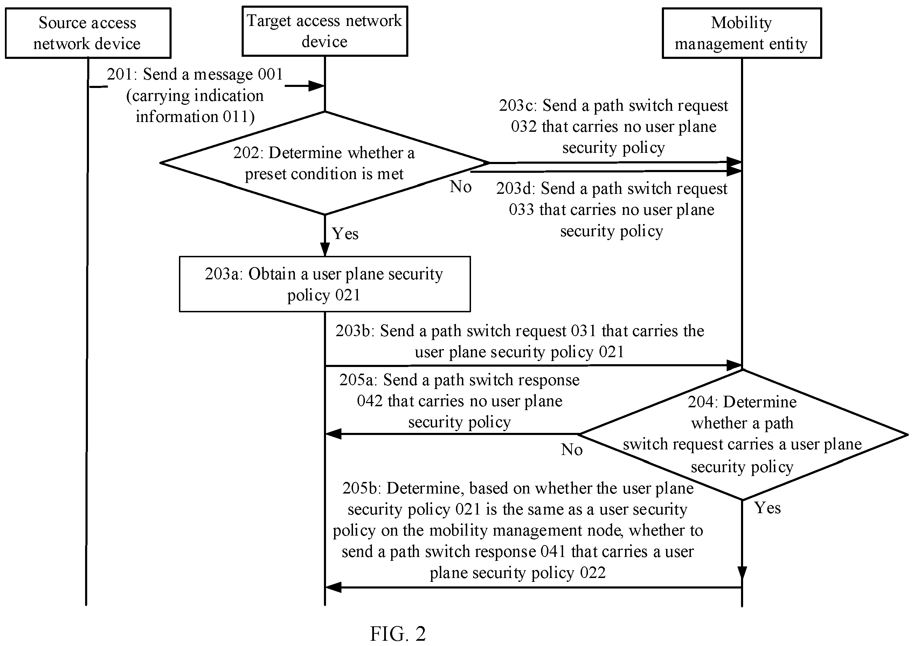

The following describes an implementation of the security policy processing method in this application based on the foregoing system architecture and application scenario. As shown in FIG. 2, an access network device and a mobility management entity perform the following steps.

Step 201: A source access network device sends, to a target access network device, a message 001 that includes indication information 011. Correspondingly, the target access network device receives, from the source access network device, the message 001 that includes the indication information 011.

In this embodiment and subsequent embodiments, for ease of description, based on orders of providing services for a terminal device, an access network device that originally provides a service for the terminal device is referred to as the source access network device, and an access network device that subsequently provides a service for the terminal device is referred to as the target access network device. For example, the terminal device may change, through a process such as handover (Handover), RRC connection resume (RRC Connection Resume), RRC connection reestablishment (RRC Connection Reestablishment) or the like, from accepting a service provided by the source access network device to accepting a service provided by the target access network device.

In this process, the target access network device may receive a context of the terminal device from the source access network device via signaling (for example, the message 001) between the target access network device and the source access network device. The context of the terminal device includes the indication information 011. Optionally, if this embodiment is applied to a handover process, the message 001 is a handover request; or if this embodiment is applied to an RRC connection resume or RRC connection reestablishment process, the message 001 is a context retrieve response.

The indication information 011 indicates whether the terminal device supports on-demand user plane security protection. Alternatively, further, the indication information 011 indicates whether the terminal device supports on-demand user plane security protection between the terminal device and an access network device. Whether the terminal device supports on-demand user plane security protection may be understood as whether the terminal device supports enabling of user plane ciphering protection and/or supports enabling of user plane integrity protection, that is, user plane ciphering protection and/or user plane integrity protection for the terminal device are not fixed. Whether the terminal device supports on-demand user plane security protection between the terminal device and an access network device may be understood as whether the terminal device supports enabling/disabling of user plane ciphering protection and/or user plane integrity protection under an indication by the access network device. The access network device herein may be an eNB, for example, a source eNB or a target eNB mentioned in the following descriptions. It should be understood that a plurality of expressions of the indication information 011 are interchangeable. In subsequent embodiments, the expression that "the indication information 011 indicates whether the terminal device supports on-demand user plane security protection" is used as an example for description.

Specifically, the indication information 011 may be represented by a part of bits of an evolved packet system security capability of the terminal device, and the evolved packet system security capability of the terminal device indicates at least one security algorithm supported by the terminal device. For example, the evolved packet system security capability of the terminal device is a UE evolved packet system security capability (UE EPS security capabilities), and the indication information 011 may be indicated by a reserved bit, for example, EEA7 or EIA7, in the evolved packet system security capability of the terminal device. The EEA7 represents a bit reserved for an 8^{th} ciphering algorithm in the UE evolved packet system security capability, and the EIA7 represents a bit reserved for an 8^{th} integrity algorithm in the UE evolved packet system security capability. In this embodiment, the bit is used to carry an indication indicating whether the terminal device supports on-demand user plane security protection. Regardless of whether an access network device is upgraded (to be specific, whether the access network device supports on-demand user plane security protection), the access network device can identify and forward the evolved packet system security capability of the terminal device (for example, the UE evolved packet system security capability). Therefore, adding the indication information 011 to the evolved packet system security capability of the terminal device can ensure that the indication information 011 is not lost during transmission between access network devices (for example, between an access network device that supports on-demand user plane security protection and an access network device that does not support on-demand user plane security protection) or between an access network device and a core network device (between an access network device that does not support on-demand user plane security protection and a mobility management entity). However, in the conventional technology, redefined indication information indicates whether a terminal device supports on-demand user security protection, and the redefined indication information cannot be identified by an unupgraded access network device. To be specific, an access network device that does not support on-demand user plane security protection cannot identify the redefined indication information. If the access network device that does not support on-demand user plane security protection receives the redefined indication information, the access network device that does not support on-demand user plane security protection discards the redefined indication information, and cannot send the redefined indication information to another access network device or a core network device (for example, a mobility management entity).

Optionally, the message 001 further includes identification information used by the terminal device to establish a bearer, for example, an identifier of an evolved radio access bearer (E-UTRAN radio access bearer, E-RAB). This may also be understood as that the context of the terminal device further includes an E-RAB identifier used to establish a bearer.

Further, the message 001 includes identifiers of N E-RABs of the terminal device, where N is an integer greater than or equal to 1.

Step 202: The target access network device determines whether a preset condition is met.

In this embodiment, the preset condition is a preset condition related to the indication information 011. When the target access network device determines that the preset condition is met, the target access network device sequentially performs step 203a and step 203b. When the target access network device determines that the preset condition is not met, the target access network device performs step 203c or step 203d. This may be understood as that the target access network device determines, based on the preset condition related to the indication information 011, whether to obtain a user plane security policy and send the user plane security policy to the mobility management entity.

The preset condition may be implemented in any one of the following manners.

In an optional implementation, the preset condition includes that the indication information 011 indicates that the terminal device supports on-demand user plane security protection.

In another optional implementation, the preset condition is the indication information 011 indicating that the terminal device supports on-demand user plane security protection, and the target access network device supporting on-demand user plane security protection.

It should be understood that, whether the target access network device supports on-demand user plane security protection may be understood as whether the access network device supports on-demand user plane security protection between the access network device and the terminal device, or may be understood as whether the access network device supports enabling of user plane ciphering protection and/or user plane integrity protection for the terminal device, or may be understood as whether the access network device can send an indication to the terminal device, so that the terminal device enables/disenables user plane ciphering protection and/or user plane integrity protection based on the indication. It should be understood that the foregoing plurality of expressions are interchangeable. In subsequent embodiments, the expression that "the target access network device supports on-demand user plane security protection" is used as an example for description.

It should be understood that when the target access network device is an upgraded access network device (to be specific, an access network device that supports on-demand user plane security protection), the target access network device can learn that the target access network device can support on-demand user plane security protection. When the target access network device is an unupgraded access network device (to be specific, an access network device that does not support on-demand user plane security protection), the target access network device can learn that the target access network device does not support on-demand user plane security protection.

In addition, it should be further understood that, if the solution of this application is applied to an upgraded access network device, when the target access network device determines whether the indication information 011 indicates that the terminal device supports on-demand user plane security protection, it actually indicates that the target access network device supports on-demand user plane security protection. Therefore, optionally, logic for determining whether the target access network device supports on-demand user plane security protection may not need to be separately set for the target access network device.

Step 203a: The target access network device obtains a user plane security policy 021.

The user plane security policy is a policy indicating whether to enable user plane ciphering protection and/or user plane integrity protection. This may also be understood as that the user plane security policy includes a user plane ciphering protection policy and a user plane integrity protection policy, where the user plane ciphering protection policy indicates whether to enable user plane ciphering protection, and the user plane integrity protection policy indicates whether to enable user plane integrity protection. Currently, the user plane ciphering protection policy and the user plane integrity protection policy each includes three indications: required (enabling is required), preferred (enabling is preferred), and not needed (enabling is not needed). Specifically, when the user plane ciphering protection policy is "required", it indicates that the user plane ciphering protection needs to be forcibly enabled; when the user plane ciphering protection policy is "not needed", it indicates that user plane ciphering protection needs to be forcibly disabled; or when the user plane ciphering protection policy is "preferred", it indicates that user plane ciphering protection may be optionally enabled based on an actual case (for example, an access network device may determine, based on a load status of the access network device, whether to enable user plane ciphering protection between the access network device and the terminal device; and when a load is greater than a threshold, user plane ciphering protection is not enabled; otherwise, user plane ciphering protection is enabled). Use of the user plane integrity protection policy is the same as that of the user plane ciphering protection policy. Details are not described again.

Specifically, the target access network device may obtain the user plane security policy 021 in the following several manners.

In an optional implementation, when the target access network device does not receive a user plane security policy from the source access network device, the user plane security policy 021 may be a user plane security policy 021-1 constructed by the target access network device.

In this implementation, because the target access network device does not receive a user plane security policy from the source access network device, the target access network device may enable on-demand user plane security protection for the terminal device in a default manner (which may be understood as an unupgraded manner). For example, the target access network device may enable user plane ciphering protection and skip enabling user plane integrity protection. The user plane security policy 021-1 constructed by the target access network device needs to match a current user plane security activation status of the terminal device, to be specific, a state in which user plane ciphering protection is enabled and user plane integrity protection is not enabled. For example, the user plane security policy 021-1 constructed by the target access network device is a policy matching the user plane security activation status in which user plane ciphering protection is enabled and user plane integrity protection is not enabled. Specifically, the user plane security policy 021-1 includes a user plane ciphering protection policy and a user plane integrity protection policy, where the user plane ciphering protection policy indicates that enabling is required (required) or is preferred (preferred), and the user plane integrity protection policy indicates that enabling is not needed (not needed) or is preferred (preferred).

For example, if the user plane security policy is expressed as {user plane ciphering protection policy, user plane integrity protection policy}, the user plane security policy 021-1 may be specifically implemented in any one of the following manners: f enabling is required (required), enabling is not needed (not needed)}; {enabling is required (required), enabling is preferred (preferred)}; {enabling is preferred (preferred), enabling is not needed (not needed)}; or { enabling is preferred (preferred), enabling is preferred (preferred)}.

It should be understood that the user plane security policy 021-1 may be a user plane security policy at an E-RAB granularity. Usually, if one terminal device corresponds to N E-RABs, the target access network device may construct a corresponding user plane security policy 021-1 for each E-RAB of the terminal device based on an E-RAB identifier obtained from the context of the terminal device. In this case, the target access network device may obtain N user plane security policies 021-1. N is an integer greater than or equal to 1. Each E-RAB corresponds to one user plane security policy 021-1. However, user plane security policies corresponding to different E-RABs may be the same or different.

In addition, when subsequently transmitting the user plane security policy, the target access network device adds the user plane security policy 021-1 and the E-RAB identifier to signaling, to indicate that the user plane security policy 021-1 is used to determine whether user plane ciphering protection and/or user plane integrity protection need to be enabled for an E-RAB corresponding to the E-RAB identifier. For details, refer to the descriptions in step 203b. In this implementation, the mobility management entity (for example, the MME) can have a finer granularity when performing determining on a user plane security policy, so that a quantity of user plane security policies returned by the MME is reduced when user plane security policies corresponding to some E-RABs are different but user plane security policies corresponding to other E-RABs are the same.

In another optional implementation, when the target access network device does not receive a user plane security policy from the source access network device, the user plane security policy 021 may be a user plane security policy 021-2 preconfigured on the target access network device.

In this implementation, the user plane security policy 021-2 is preconfigured on the target access network device, and the preconfigured user plane security policy 021-2 may be a policy applicable to all terminal devices. The preconfigured user plane security policy may include a user plane ciphering protection policy and/or a user plane integrity protection policy. The user plane ciphering protection policy may be any one of the following: Enabling is required (required), enabling is preferred (preferred), or enabling is not needed (not needed). The user plane integrity protection policy may also be any one of the following: Enabling is required (required), enabling is preferred (preferred), or enabling is not needed (not needed).

Specifically, the target access network device may preconfigure only one user plane security policy applicable to all the terminal devices, and then map the user plane security policy to obtain N user plane security policies 021-2 at an E-RAB granularity. In this implementation, complexity of configuring a user plane security policy by the target access network device can be reduced. In addition, the mobility management entity (for example, the MME) can have a finer granularity when performing determining on a user plane security policy, so that a quantity of user plane security policies returned by the MME is reduced when user plane security policies corresponding to some E-RABs are different but user plane security policies corresponding to other E-RABs are the same.

In addition, the user plane security policy 021 may alternatively be a user plane security policy 021-3 obtained by the target access network device from another device.

In a possible implementation, if the source access network device supports on-demand user plane security protection, the signaling between the target access network device and the source access network device may carry the user plane security policy 021-3. In this case, the user plane security policy 021 may be the user plane security policy 021-3 received by the target access network device from the source access network device.

Step 203b: The target access network device sends, to the mobility management entity, a path switch request (path switch request) 031 that carries the user plane security policy 021. Correspondingly, the mobility management entity receives, from the target access network device, the path switch request 031 that carries the user plane security policy 021.

The user plane security policy 021 may be the user security policy determined in any one of the implementations in step 203a. For example, the user plane security policy 021 may be the user plane security policy 021-1, the user plane security policy 021-2, or the user plane security policy 021-3.

In an optional implementation, the path switch request 031 is a path switch request 031-1, and the path switch request 031-1 carries the user plane security policy 021. For example, the user plane security policy 021 is a security policy at a terminal device granularity, and one terminal device corresponds to one user plane security policy. In this case, in addition to the user plane security policy 021, the path switch request 031 may further carry an identifier of a terminal device (for example, an eNB UE S1AP ID or an MME UE S1AP ID).

In another optional implementation, the path switch request 031 is a path switch request 031-2, the path switch request 031-2 carries N user plane security policies 021 at an E-RAB granularity and identifiers of N E-RABs, and each identifierof the identifiers of the N E-RABs corresponds to one of the N user plane security policies 021. Specifically, the target access network device adds, to the path switch request 031-2, both the identifier of the E-RAB and the user plane security policy corresponding to the E-RAB, so that both the identifier of the E-RAB and the user plane security policy corresponding to the E-RAB can be sent to the mobility management entity. Correspondingly, when the mobility management entity receives the path switch request 031-2 that carries both the identifier of the E-RAB and the user plane security policy, the mobility management entity can learn of an E-RAB to which the user plane security policy is applicable. In addition, the path switch request 031-2 may further carry an identifier of a terminal device (for example, an eNB UE S1AP ID or an MME UE S1AP ID), to indicate a terminal device corresponding to one or more of the E-RABs.

It should be noted that, if the user security policy 021 carried in the path switch request 031-2 is the user plane security policy 021-1 constructed by the target access network device, the N user plane security policies 021-1 carried in the path switch request 031-2 may be the same or different.

For example, an implementation in which the path switch request 031-2 carries a plurality of user plane security policies 021-1 is specifically as follows: {E-RAB 1: user plane security policy 021-1-1}, {E-RAB 2: user plane security policy 021-1-2}, and {E-RAB 3: user plane security policy 021-1-3}. Content of the user plane security policy 021-1-1, content of the user plane security policy 021-1-2, and content of the user plane security policy 021-1-3 may be the same or different.

However, if the user security policy 021 carried in the path switch request 031-2 is a plurality of user plane security policies 021-2 obtained by mapping the user plane security policy that is preconfigured by the target access network device and that is applicable to all the terminal devices, content of all the N user plane security policies 021-2 carried in the path switch request 031-2 is the same.

For example, an implementation in which the path switch request 031-2 carries a plurality of user plane security policies 021-2 is specifically as follows: {E-RAB 1: user plane security policy 021-2}, {E-RAB 2: user plane security policy 021-2}, and {E-RAB 3: user plane security policy 021-2}. Content of the user plane security policy 021-2, content of the user plane security policy 021-2, and content of the user plane security policy 021-2 are the same.

In this implementation, the target access network device may determine, for each E-RAB corresponding to the terminal device, whether to enable user plane ciphering protection and/or user plane integrity protection. This facilitates fine-grained management of a user plane security policy and a user plane security activation status.

Step 203c: The target access network device sends, to the mobility management entity, a path switch request 032 that carries no user plane security policy. Correspondingly, the mobility management entity receives, from the target access network device, the path switch request 032 that carries no user plane security policy.

In this embodiment, if the preset condition includes that the indication information 011 indicates that the terminal device supports on-demand user plane security protection, when the indication information 011 indicates that the terminal device does not support on-demand user plane security protection, the target access network device sends, to the mobility management entity, the path switch request 032 that carries no user plane security policy.

If the preset condition is the indication information 011 indicating that the terminal device supports on-demand user plane security protection, and the target access network device supporting on-demand user plane security protection, when the indication information 011 indicates that the terminal device does not support on-demand user plane security protection, or when the target access network device does not support on-demand user plane security protection, the target access network device sends, to the mobility management entity, the path switch request 032 that carries no user plane security policy.

Step 203d: The target access network device sends, to the mobility management entity, a path switch request 033 that carries no user plane security policy. Correspondingly, the mobility management entity receives, from the target access network device, the path switch request 033 that carries no user plane security policy.

The path switch request 033 that carries no user plane security policy carries the indication information 011.

In the conventional technology, a target access network device only determines whether a user plane security policy is received from a source access network device. If a user plane security policy is received, the target access network device sends the user plane security policy to a mobility management entity. Otherwise, the target access network device cannot add a user plane security policy during interaction with the mobility management entity. Compared with the conventional technology, in this application, logic of performing determining by the target access network device based on the indication information 011 is added, so that the target access network device sends a user plane security policy to the mobility management entity only when the terminal device supports on-demand user plane security protection. In this way, an updated user plane security policy returned by the mobility management entity is applicable to the target access network device. To be specific, the target access network device can use the user plane security policy to enable or disable user plane ciphering protection and/or user plane integrity protection for the terminal device. Otherwise, if the terminal device does not support on-demand user plane security protection, even if the target access network device can obtain a user plane security policy, the target access network device cannot enable user plane ciphering protection or user plane integrity protection for the terminal device. Therefore, a probability that the access network device receives an information element that cannot be used is reduced.

Step 204: The mobility management entity determines whether a path switch request carries a user plane security policy.

The path switch request may be any one of the path switch request 031, the path switch request 032, and the path switch request 033.

In an optional implementation, if the path switch request carries no user plane security policy, for example, the path switch request is the path switch request 032, the mobility management entity performs step 205a; or if the path switch request carries a user plane security policy, for example, the path switch request is the path switch request 031, the mobility management entity performs step 205b.

In another optional implementation, if the path switch request carries no user plane security policy but the switch request carrying no user plane security policy carries the indication information 011, that is, the mobility management entity receives the path switch request 033, the mobility management entity further compares the indication information 011 with indication information 012 on the mobility management entity. If the indication information 012 on the mobility management entity indicates that the terminal device supports on-demand user plane security protection, the mobility management entity sends, to the target access network device, a path switch response 043 (not shown in the figure) that carries the indication information 012 and a user plane security policy 023. If the indication information 011 is consistent with the indication information 012 on the mobility management entity, the mobility management entity performs step 205a. In this implementation, if the source access network device is malicious, the source access network device may maliciously tamper with the indication information 011, to make the indication information 011 indicate that the terminal device does not support on-demand user plane security protection. Consequently, the target access network device cannot send a user plane security policy to the mobility management entity, and cannot enable on-demand user plane security protection for the terminal device. This causes a degradation attack. Therefore, after determining not to send a user plane security policy to the mobility management device, the target access network device may additionally send the indication information 011, so that the mobility management entity can determine whether the indication information 011 is tampered with. After determining that the indication information 011 is tampered with, the mobility management entity sends a user plane security policy to the target access network device. This can avoid the degradation attack.

The indication information 012 comes from the terminal device, and may be provided by the terminal device for the mobility management entity when the terminal device is initially attached to a network. For related descriptions of the user plane security policy 023, refer to descriptions in step 205b. Details are not described herein.

In addition, the target access network device further stores the user plane security policy 023 in the context of the terminal device. It should be understood that, if a user plane security policy (for example, a user plane security policy 023') is stored in the context of the terminal device, the target access network device updates, by using the user plane security policy 023, the user plane security policy 023' stored in the context of the terminal device. If no user plane security policy is stored in the context of the terminal device, the target access network device directly stores the user plane security policy 023.

Step 205a: The mobility management entity sends, to the target access network device, a path switch response (path switch request acknowledge) 042 that carries no user plane security policy. Correspondingly, the target access network device receives, from the mobility management entity, the path switch response 042 that carries no user plane security policy.

In the conventional technology, after a mobility management entity receives a path switch request that carries no user plane security policy, the mobility management entity sends a user plane security policy to a target access network device to enable user plane integrity protection between an access network device and a terminal device in a 4G network. In this case, the target access network device and the terminal device may not be able to use the user plane security policy.

However, in this embodiment, in the foregoing steps, when the indication information 011 indicates that the terminal device supports on-demand user plane security protection, the target access network device determines the user plane security policy 021 in any one of the implementations in step 203a, and adds the user plane security policy 021 to the path switch request, to send the user plane security policy 021 to the mobility management entity. Therefore, it can be learned that, if the indication information 011 indicates that the terminal device does not support on-demand user plane security protection, the target access network device does not send a user plane security policy to the mobility management entity, and correspondingly, the mobility management entity cannot receive a user plane security policy from the target access network device. In this case, it can be inferred that the terminal device does not support on-demand user plane security protection, and even if a user plane security policy is provided for the target access network device, the target access network device cannot enable user plane integrity protection for the terminal device by using the user plane security policy. Therefore, the mobility management entity is configured to: when receiving the path switch request 042 that carries no user plane security policy, send, to the target access network device, a path switch response that carries no user plane security policy, that is, not provide a user plane security policy for the target access network device. Therefore, a probability that the target access network device receives an information element that cannot be used is reduced, and complexity of data transmission between the target access network device and the mobility management entity is reduced.

Step 205b: The mobility management entity determines, based on whether the user plane security policy 021 is consistent with a user security policy on the mobility management entity, whether to send a path switch response 041 that carries a user plane security policy 022.

Specifically, if the user plane security policy 021 is consistent with the user security policy on the mobility management entity, the mobility management entity sends, to the target access network device, a path switch response that carries no user plane security policy.

If the user plane security policy 021 is inconsistent with the user security policy on the mobility management entity, the mobility management entity sends, to the target access network device, the path switch response 041 that carries the user plane security policy 022. Then the target access network device further stores the user plane security policy 022 in the context of the terminal device. It should be understood that, if a user plane security policy (for example, the user plane security policy 021) is stored in the context of the terminal device, the target access network device updates, by using the user plane security policy 022, the user plane security policy 021 stored in the context of the terminal device. If no user plane security policy is stored in the context of the terminal device, the target access network device directly stores the user plane security policy 022.

The user plane security policy 022 may be obtained based on a user plane security policy obtained by a home subscriber server HSS, or may be obtained based on a user plane security policy preconfigured on the mobility management entity.

Optionally, the user plane security policy obtained by the mobility management entity from the HSS or preconfigured on the mobility management entity is at an access point name (access point name, APN) granularity. After mapping the user plane security policy at the APN granularity to a user plane security policy at an E-RAB granularity, the mobility management entity obtains the user plane security policy 022 at an E-RAB granularity.

Optionally, if the path switch request 031 in step 203b is the path switch request 031-1, the path switch request 031-1 carries a user plane security policy 021, and the user plane security policy 021 is a security policy at a terminal device granularity, the mobility management entity compares the user plane security policy 021 with a user plane security policy at a terminal device granularity on the mobility management entity. If the user plane security policy 021 is consistent with the user security policy at the terminal device granularity on the mobility management entity, the mobility management entity sends, to the target access network device, a path switch response that carries no user plane security policy. If the user plane security policy 021 is inconsistent with the user security policy at the terminal device granularity on the mobility management entity, the mobility management entity sends, to the target access network device, the path switch response 041 that carries the user plane security policy 022. In this case, the user plane security policy 022 is a security policy at a terminal device granularity.

Particularly, in the case described in step 205a, the mobility management entity obtains user plane security policies 022 for all E-RABs corresponding to the terminal device. Specifically, the mobility management entity obtains, from the context of the terminal device, identifiers of all the E-RABs corresponding to the terminal device, obtains a corresponding APN based on each of the identifiers of the E-RABs, and then obtains, according to a user plane security policy corresponding to the APN, a user plane security policy 022 corresponding to each E-RAB.

Optionally, if the path switch request in step 203b is the path switch request 031-2, and the path switch request 031-2 carries N user plane security policies 021 at an E-RAB granularity, where each user plane security policy 021 is a policy at an E-RAB granularity, the mobility management entity performs comparison for a user plane security policy corresponding to each E-RAB. If a user plane security policy 021 corresponding to each E-RAB is consistent with a user security policy corresponding to the corresponding E-RAB on the mobility management entity, the mobility management entity sends, to the target access network device, a path switch response that carries no user plane security policy. If a user plane security policy 021 corresponding to an E-RAB is inconsistent with a user security policy corresponding to the same E-RAB on the mobility management entity, the mobility management entity sends, to the target access network device, the path switch response 041 that carries the user plane security policy 022. The user plane security policy 022 is a security policy at an E-RAB granularity, and the user plane security policy 022 is a security policy inconsistent with the user plane security policy 021. In this implementation, the user plane security policy on the mobility management entity may be inconsistent with some or all of the plurality of user plane security policies 021. This is not specifically limited herein. Optionally, the path switch response that carries the user plane security policy 022 may further carry an identifier of an E-RAB corresponding to the user plane security policy 022.

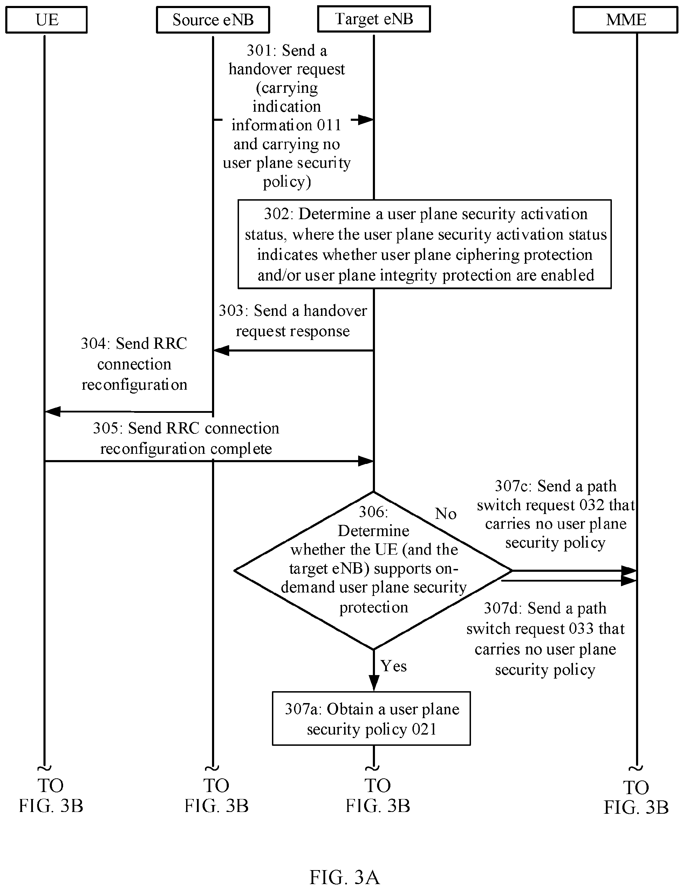

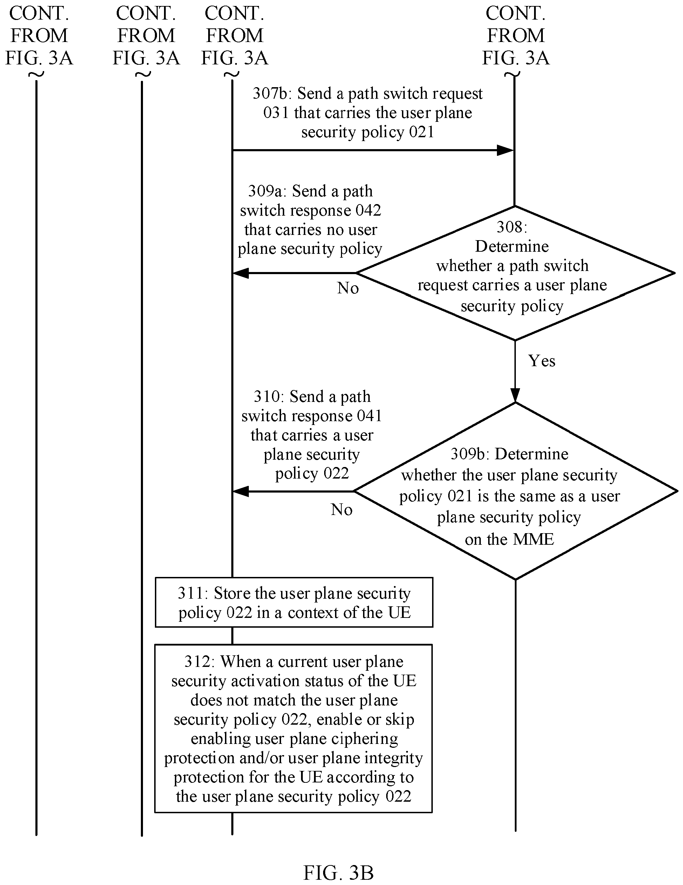

Further, the target access network device reactivates the terminal device according to the user plane security policy 022, to be specific, determines, according to the user plane security policy 022, whether to enable user plane ciphering protection and/or user plane integrity protection for the terminal device. For details, refer to related descriptions in step 309b to step 312 in the following embodiment corresponding to FIG. 3A and FIG. 3B. Details are not described herein.

In this embodiment, the target access network device can determine, based on the indication information 011, whether the terminal device supports on-demand user plane security protection, and the target access network device sends a user plane security policy to the mobility management entity only when the terminal device supports on-demand user plane security protection. This avoids the following case: When the terminal device does not support on-demand user plane security protection and the mobility management entity does not receive a user plane security policy from the target access network device, the mobility management entity sends a user plane security policy to the target access network device, and consequently, the target access network device cannot enable on-demand user plane security protection for the terminal device even if the target access network device receives the user plane security policy. Therefore, this helps reduce a probability that the mobility management entity sends, to the target access network device, an information element that is not required by the access network device, and therefore helps reduce transmission complexity.

The security policy processing method described in the embodiment corresponding to FIG. 2 may be applied to any one of the following processes: handover (Handover), RRC connection resume (RRC Connection Resume), and RRC connection reestablishment (RRC Connection Reestablishment). A handover process shown in FIG. 3A and FIG. 3B is used as an example below for further description. A target eNB is an implementation of the foregoing target access network device, a source eNB is an implementation of the foregoing source access network device, an MME is an implementation of the foregoing mobility management entity, and an HSS is an implementation of the foregoing home subscriber server. In addition, it is assumed that the target eNB is an upgraded eNB (to be specific, an eNB that supports on-demand user plane security protection), and the source eNB is an unupgraded eNB (to be specific, an eNB that does not support on-demand user plane security protection). The foregoing devices perform the following steps.

Step 301: The source eNB sends a handover request (handover request) to the target eNB. Correspondingly, the target eNB receives the handover request from the source eNB.

The handover request is an implementation of the message 001 in a handover scenario.

The handover request carries indication information 011, and carries no user plane security policy. The indication information 011 indicates whether UE supports on-demand user plane security protection. Specifically, the indication information 011 indicates whether the UE supports user plane ciphering protection and/or user plane integrity protection. The LTE is LTE to be handed over from the source eNB to the target eNB. In addition, the indication information 011 is carried in a UE evolved packet system security capability (UE EPS security capabilities), and is indicated by a reserved bit, for example, EEA7 or EIA7, in the UE evolved packet system security capability. Specifically, for descriptions of the indication information 011, refer to the descriptions in step 201. Details are not described herein again.

Step 302: The target eNB determines a user plane security activation status, where the user plane security activation status indicates whether user plane ciphering protection and/or user plane integrity protection are enabled.

The user plane security activation status includes a ciphering activation status and/or an integrity activation status, where the ciphering activation status indicates whether user plane ciphering protection is enabled, and the integrity activation status indicates whether user plane integrity protection is enabled.

In addition, the user plane security activation status is at a data radio bearer (data radio bearer, DRB) granularity. Usually, one UE corresponds to one or more E-RABs, and one E-RAB may be mapped to one or more DRBs. Therefore, the target eNB needs to determine, for each DRB corresponding to the LTE, whether to enable user plane ciphering protection and/or whether to enable user plane integrity protection.

Because the handover request received by the target eNB carries no user security policy, the target access network device may determine the user plane security activation status for the UE in any one of the following manners.

Manner 1: The target eNB may determine the user plane security activation status for the UE in a default manner (which may also be understood as an unupgraded manner). To be specific, user plane ciphering protection is always enabled, but user plane integrity protection is not enabled. Specifically, ciphering activation statuses corresponding to all DRBs of the UE are enabled, and integrity activation statuses corresponding to the DRBs are not enabled.

Manner 2: A user plane security policy is preconfigured on the target eNB, and the preconfigured user plane security policy may be a policy applicable to all UEs. If the target eNB determines, based on the indication information 011, that the UE supports on-demand user plane security protection, the target eNB determines the user plane security activation status according to the preconfigured user plane security policy.

Specifically, if a user plane ciphering protection policy is "required", the target eNB determines that ciphering activation statuses corresponding to all DRBs of the UE are enabled. If a user plane ciphering protection policy is "preferred", the target eNB determines that ciphering activation statuses corresponding to all the DRBs of the UE may be enabled or not enabled. The target eNB may perform determining according to a local policy (for example, an operating status of the target eNB, a control policy, or a regulation requirement). If a user plane ciphering protection policy is "not needed", the target eNB determines that ciphering activation statuses corresponding to all the DRBs of the UE are not enabled.

Correspondingly, if a user plane integrity protection policy is "required", the target eNB determines that integrity activation statuses corresponding to all the DRBs of the UE are enabled. If a user plane integrity protection policy is "preferred", the target eNB determines that integrity activation statuses corresponding to all the DRBs of the UE may be enabled or not enabled. The target eNB may perform determining according to a local policy (for example, an operating status of the target eNB, a control policy, or a regulation requirement). If a user plane integrity protection policy is "not needed", the target eNB determines that integrity activation statuses corresponding to all the DRBs of the UE are not enabled.

Step 303: The target eNB sends a handover request response (handover request acknowledge) to the source eNB. Correspondingly, the source eNB receives the handover request response from the target eNB.

The handover request response includes the user plane security activation status that needs to be sent to the UE. Specifically, the handover request response includes radio resource control RRC reconfiguration (RRC connection reconfiguration), where the RRC reconfiguration, is constructed by the target eNB. The user plane security activation status of the UE is included in the RRC reconfiguration. To be specific, the target eNB encapsulates the user plane security activation status into the RRC reconfiguration, and sends the RRC reconfiguration to the source eNB by using the handover request response, and then the source eNB forwards the RRC reconfiguration in which the user plane security activation status is encapsulated to the UE.

The RRC reconfiguration includes DRB configuration information. The DRB configuration information indicates the LTE whether to enable user plane ciphering protection and/or user plane integrity protection for a DRB. Usually, if a ciphering disabled (ciphering disabled) field is encapsulated in the DRB configuration information, the UE does not enable ciphering protection for the DRB; or if no ciphering disabled (ciphering disabled) field is encapsulated in the DRB configuration information, the UE enables ciphering protection for the DRB. If an integrity protection (integrity protection) field is encapsulated in the DRB configuration information, the UE enables integrity protection for the DRB; or if no integrity protection (integrity protection) field is encapsulated in the DRB configuration information, the UE does not enable integrity protection for the DRB.

For example, when the target eNB determines that the ciphering activation statuses corresponding to all the DRBs of the UE are enabled and the integrity activation statuses corresponding to the DRBs are not enabled, the RRC reconfiguration does not include DRB configuration information.

Step 304: The source eNB sends RRC reconfiguration to the UE. Correspondingly, the UE receives the RRC reconfiguration from the source eNB.

To be specific, the source eNB forwards, to the UE, the RRC reconfiguration received from the target eNB, so that the UE performs RRC reconfiguration based on content carried in the RRC reconfiguration.

In an optional implementation, the RRC reconfiguration includes the user plane security activation status indicated by the target eNB to the LTE. This may be understood as that the RRC reconfiguration includes the DRB configuration information determined by the target eNB. In this case, the target eNB explicitly indicates the UE to skip enabling user plane ciphering protection and/or enable user plane integrity protection.

For example, when the DRB configuration information carried in the RRC reconfiguration is the ciphering disabled (ciphering disabled) field and the integrity protection (integrity protection) field, this may be understood as that the target eNB explicitly sends the user plane security activation status to the UE.

In another optional implementation, the RRC reconfiguration does not include DRB configuration information. In this case, the target eNB implicitly indicates the UE to enable user plane ciphering protection and/or skip enabling user plane integrity protection. This may be understood as that the target eNB implicitly sends the user plane security activation status to the UE.

For example, when the RRC reconfiguration does not carry the ciphering disabled (ciphering disabled) field or the integrity protection (integrity protection) field, this may be understood as that the target eNB implicitly indicates the UE to enable user plane ciphering protection and skip enabling user plane integrity protection.

In addition, there may alternatively be another implementation. For example, when the DRB configuration information carried in the RRC reconfiguration includes only the ciphering disabled (ciphering disabled) field, this may be understood as that the target eNB explicitly indicates the UE to skip enabling user plane ciphering protection, and implicitly indicates the UE to skip enabling user plane integrity protection. For another example, when the DRB configuration information carried in the RRC reconfiguration includes only the integrity protection (integrity protection) field, this may be understood as that the target eNB implicitly indicates the LTE to enable user plane ciphering protection, and explicitly indicates the UE to enable user plane integrity protection.

It should be understood that, in step 303 and step 304, other configuration information, such as a DRB ID, that needs to be transmitted to the LTE may be further carried. Examples are not described one by one in this embodiment.

Step 305: The UE sends RRC reconfiguration complete to the target eNB. Correspondingly, the target eNB receives the RRC reconfiguration complete from the UE.

The RRC reconfiguration complete message indicates, to the target eNB, that the UE has completed RRC reconfiguration and the UE is successfully handed over from the source eNB to the target eNB. Then the UE may directly perform signaling interaction with the target eNB.

Step 306: The target eNB determines whether the UE supports on-demand user plane security protection.

It should be noted that there is no chronological order between step 302 to step 305 and step 306, and step 306 may be performed after step 301. To be specific, after receiving the handover request from the source eNB, the target eNB may determine the user plane security activation status of the UE based on content of the handover request, and the target eNB also determines, based on the indication information 011 carried in the handover request, whether the UE supports on-demand user plane security protection.

Specifically, the target eNB determines, based on the indication information 011, whether the UE supports on-demand user security protection.

Optionally, the target eNB may further determine whether the target eNB supports on-demand user plane security protection. For details, refer to related descriptions in step 202. Details are not described herein again.

When the target eNB determines that the UE supports on-demand user plane security protection, the target eNB sequentially performs step 307a and step 307b. When the target eNB determines that the UE does not support on-demand user plane security protection or the target eNB does not support on-demand user plane security protection, the target eNB performs step 307c or 307d.

Step 307a: The target eNB obtains a user plane security policy 021.

Specifically, the target eNB may obtain the user plane security policy 021 in the following several manners.

Manner 1: When the target eNB does not receive a user plane security policy from the source eNB, the user plane security policy 021 may be a user plane security policy 021-1 constructed by the target access network device. This may also be understood as that the target eNB constructs the user plane security policy 021-1.

In this implementation, because the target eNB does not receive a user plane security policy from the source eNB, the target eNB may enable on-demand user plane security protection for the UE in a default manner (which may be understood as an unupgraded manner). To be specific, user plane ciphering protection is enabled, but user plane integrity protection is not enabled. The user plane security policy 021-1 constructed by the target eNB needs to match a current user plane security activation status of the LTE, for example, a state in which user plane ciphering protection is enabled and user plane integrity protection is not enabled. For example, the user plane security policy 021-1 constructed by the target eNB is a policy matching the user plane security activation status in which user plane ciphering protection is enabled and user plane integrity protection is not enabled. Specifically, the user plane security policy 021-1 includes a user plane ciphering protection policy and a user plane integrity protection policy, where the user plane ciphering protection policy indicates that enabling is required (required) or is preferred (preferred), and the user plane integrity protection policy indicates that enabling is not needed (not needed) or is preferred (preferred).

For example, if the user plane security policy is expressed as {user plane ciphering protection policy, user plane integrity protection policy}, the user plane security policy 021-1 may be specifically implemented in any one of the following manners: f enabling is required (required), enabling is not needed (not needed)}; {enabling is required (required), enabling is preferred (preferred)}; {enabling is preferred (preferred), enabling is not needed (not needed)}; or { enabling is preferred (preferred), enabling is preferred (preferred)}.

In addition, the user plane security policy 021-1 is a security policy at an E-RAB granularity. Specifically, the target eNB obtains an identifier of an E-RAB, and sends the identifier of the E-RAB together with the user plane security policy 021 to the MME in a subsequent process. For details, refer to related descriptions in step 203a and step 203b. Details are not described herein again.

Manner 2: When the target eNB does not receive a user plane security policy from the source eNB, the user plane security policy 021 may be a user plane security policy 021-2 preconfigured on the target access network device. This may be understood as that the target eNB determines the user plane security policy 021-2 according to a preconfigured security policy.

In this implementation, a user plane security policy is preconfigured on the target eNB, and the preconfigured user plane security policy may be a policy applicable to all UEs. The preconfigured user plane security policy may include a ciphering protection policy and/or an integrity protection policy. The ciphering protection policy may be any one of the following: Enabling is required (required), enabling is preferred (preferred), or enabling is not needed (not needed). The integrity protection policy may also be any one of the following: Enabling is required (required), enabling is preferred (preferred), or enabling is not needed (not needed).

For example, if the user plane security policy is expressed as {user plane ciphering protection policy, user plane integrity protection policy}, the user plane security policy 021-2 may be specifically implemented in any one of the following manners: f enabling is required (required), enabling is required (required)}; {enabling is required (required), enabling is preferred (preferred)}; {enabling is required (required), enabling is not needed (not needed)}; {enabling is preferred (preferred), enabling is required (required)}; {enabling is preferred (preferred), enabling is preferred (preferred)}; {enabling is preferred (preferred), enabling is not needed (not needed)}; {enabling is not needed (not needed), enabling is required (required)}; {enabling is not needed (not needed), enabling is preferred (preferred)}; or {enabling is not needed (not needed), enabling is not needed (not needed)}.

For details, refer to related descriptions in step 203a and step 203b. Details are not described herein again.

Step 307b: The target eNB sends, to the MME, a path switch request (path switch request) 031 that carries the user plane security policy 021. Correspondingly, the MME receives, from the target eNB, the path switch request 031 that carries the user plane security policy 021.

The user plane security policy 021 may be the user security policy determined in any one of the implementations in step 307a. For example, the user plane security policy 021 may be the user plane security policy 021-1 or the user plane security policy 021-2.

For details, refer to related descriptions in step 203b. Details are not described herein again.

Step 307c: The target eNB sends, to the MME, a path switch request 032 that carries no user plane security policy. Correspondingly, the MME receives, from the target eNB, the path switch request 032 that carries no user plane security policy.

The path switch request 032 does not carry indication information 011.

Step 307d: The target eNB sends, to the MME, a path switch request 033 that carries no user plane security policy. Correspondingly, the MME receives, from the target eNB, the path switch request 033 that carries no user plane security policy.

The path switch request 033 carries indication information 011. The indication information 011 may be the indication information 011 obtained by the target eNB from the source eNB.

Step 308: The MME determines whether a path switch request carries a user plane security policy.

The path switch request may be any one of the path switch request 031, the path switch request 032, and the path switch request 033.

In an optional implementation, if the path switch request carries no user plane security policy, for example, the path switch request is the path switch request 032, the MME performs step 309a; or if the path switch request carries a user plane security policy, for example, the path switch request is the path switch request 031, the MME performs step 309b.

In another optional implementation, if the path switch request carries no user plane security policy but the switch request carryingno user plane security policy carries the indication information 011, that is, the MME receives the path switch request 033, the MME further compares the indication information 011 with indication information 012 on the MME. If the indication information 012 on the MME indicates that the UE supports on-demand user plane security protection, the MME sends, to the target eNB, a path switch response 043 (not shown in the figure) that carries the indication information 012 and a user plane security policy 023. If the indication information 011 is consistent with the indication information 012 on the MME, the MME sends, to the target eNB, a path switch response 045 (not shown in the figure) that carries no user plane security policy or indication information. In this implementation, if the source eNB is malicious, the source eNB may maliciously tamper with the indication information 011, to make the indication information 011 indicate that the UE does not support on-demand user plane security protection. Consequently, the target eNB cannot send a user plane security policy to the MME, and cannot enable on-demand user plane security protection for the LTE. This causes a degradation attack. Therefore, after determining not to send a user plane security policy to the mobility management device, the target eNB may additionally send the indication information 011, so that the MME can determine whether the indication information 011 is tampered with. After determining that the indication information 011 is tampered with, the MME sends a user plane security policy to the target eNB. This can avoid the degradation attack.

The indication information 012 comes from the UE, and may be provided by the UE for the MME when the UE is initially attached to a network.

In addition, the target eNB further stores the user plane security policy 023 in a context of the UE. It should be understood that, if a user plane security policy (for example, a user plane security policy 023') is stored in the context of the UE, the target eNB updates, by using the user plane security policy 023, the user plane security policy 023' stored in the context of the LTE. If no user plane security policy is stored in the context of the UE, the target eNB directly stores the user plane security policy 023.

Step 309a: The MME sends, to the target eNB, a path switch response (path switch request acknowledge) 042 that carries no user plane security policy. Correspondingly, the target eNB receives, from the MME, the path switch response 042 that carries no user plane security policy.

In the conventional technology, after an MME receives a path switch request that carries no user plane security policy, the MME sends a user plane security policy to a target eNB to enable user plane integrity protection between an eNB and UE in a 4G network. In this case, the target eNB and the UE may not be able to use the user plane security policy. However, in this embodiment, when the indication information 011 indicates that the UE supports on-demand user plane security protection, the target eNB sends the constructed or preconfigured user plane security policy 021 to the MME. Therefore, it can be learned that, if the indication information 011 indicates that the UE does not support on-demand user plane security protection, the target eNB does not send a user plane security policy to the MME, and correspondingly, the MME cannot receive a user plane security policy from the target eNB. In this case, it can be inferred that the UE does not support on-demand user plane security protection, and even if a user plane security policy is provided for the target eNB, the target eNB cannot enable user plane integrity protection for the UE by using the user plane security policy. Therefore, the MME is configured to: when receiving a path switch request that carries no user plane security policy, send, to the target eNB, a path switch response that carries no user plane security policy, that is, not provide a user plane security policy for the target eNB. Therefore, a probability that the target eNB receives an information element that cannot be used is reduced, and complexity of data transmission between the target eNB and the MME is reduced.

Step 309b: The MME determines whether the user plane security policy 021 is consistent with a user plane security policy on the MME.

If the user plane security policy 021 is inconsistent with the user plane security policy on the MME, the MME performs step 310. If the user plane security policy 021 is consistent with the user plane security policy on the MME, the MME sends, to the target eNB, a path switch response that carries no user plane security policy.

The user plane security policy 022 may be obtained based on a user plane security policy obtained from the home subscriber server HSS, or may be obtained based on a user plane security policy preconfigured on the mobility management entity.

For example, during network access of the UE, the UE sends an attach request (attach request) to the MME, where the attach request carries an identifier of the UE, for example, an international mobile subscriber identity (international mobile subscriber identity, IMSI). Then the MME sends the identifier of the UE to the HSS by using a location update request (update location request), and the HSS sends a location update response (update location request acknowledge) to the MME. The location update response carries subscription data of the LTE, and the subscription data may include the foregoing user plane security policy.

In an optional implementation, if the path switch request 031 in step 307b carries the user plane security policy 021 and the user plane security policy 021 is a security policy at a LTE granularity, the MME compares the user plane security policy 021 with a user plane security policy at a UE granularity on the MME. In this case, if the user plane security policy 021 is consistent with the user security policy at the UE granularity on the MME, the MME sends, to the target eNB, a path switch response that carries no user plane security policy. If the user plane security policy 021 is inconsistent with the user security policy at the UE granularity on the MME, the MME performs step 310.

In another optional implementation, if the path switch request 031 in step 307b carries one or more user plane security policies 021 and each user plane security policy 021 is a policy at an E-RAB granularity, the MME performs comparison for a user plane security policy corresponding to each E-RAB. If a user plane security policy 021 corresponding to each E-RAB is consistent with a user security policy corresponding to the corresponding E-RAB on the MME, the MME sends, to the target eNB, a path switch response that carries no user plane security policy. If a user plane security policy 021 corresponding to at least one E-RAB is inconsistent with a user security policy corresponding to the corresponding E-RAB on the MME, the MME performs step 310.

For example, it is assumed that the path switch request 031 in step 307b carries three user plane security policies 021, for example, a user plane security policy 021a, a user plane security policy 021b, and a user plane security policy 021c, where the user plane security policy 021a corresponds to an E-RAB 1, the user plane security policy 021b corresponds to an E-RAB 2, and the user plane security policy 021c corresponds to an E-RAB 3. If user plane security policies stored on the MME are a user plane security policy 021d corresponding to the E-RAB 1, the user plane security policy 021b corresponding to the E-RAB 2, and the user plane security policy 021c corresponding to the E-RAB 3, because the user plane security policy 021a that corresponds to the E-RAB 1 and that is carried in the path switch request is inconsistent with the user plane security policy 021d that corresponds to the E-RAB 1 and that is stored on the MME, the MME returns, to the target eNB, a path switch response that carries the user plane security policy 021d, and the path switch response further carries an identifier of the E-RAB 1.

Step 310: The MME sends, to the target eNB, a path switch response 041 that carries a user plane security policy 022. Correspondingly, the target eNB receives, from the MME, the path switch response 041 that carries the user plane security policy 022.

Optionally, if the path switch request 033 received by the MME in step 307d carries no user plane security policy, but the path switch request 033 that carries no user plane security policy carries the indication information 011, and the indication information 012 indicates that the UE supports on-demand user plane security protection, the MME sends, to the target eNB, the path switch response 043 that carries the indication information 012 and the user plane security policy 023.

Step 311: The target eNB stores the user plane security policy 022 in the context of the UE.

It should be understood that, if a user plane security policy (for example, the user plane security policy 021) is stored in the context of the UE, the target eNB updates, by using the user plane security policy 022, the user plane security policy 021 stored in the context of the LTE. If no user plane security policy is stored in the context of the UE, the target eNB directly stores the user plane security policy 022.

Step 312: When the current user plane security activation status of the LTE does not match the user plane security policy 022, the target eNB enables or skips enabling user plane ciphering protection and/or user plane integrity protection for the UE according to the user plane security policy 022.

The user plane security policy 022 includes a user plane ciphering protection policy and a user plane integrity protection policy.

When any one of the following conditions is met, the current user plane security activation status of the LTE does not match the user plane security policy 022:
the user plane security activation status of the LTE is that ciphering protection is not enabled, and the user plane ciphering protection policy indicates that enabling is required (required); or
the user plane security activation status of the UE is that ciphering protection is enabled, and the user plane ciphering protection policy indicates that enabling is not needed (not needed); or
the user plane security activation status of the UE is that integrity protection is not enabled, and the user plane integrity protection policy indicates that enabling is required (required); or
the user plane security activation status of the UE is that integrity protection is enabled, and the user plane integrity protection policy indicates that enabling is not needed (not needed).

Specifically, a process of enabling or disabling, by the target eNB, a ciphering protection status and/or an integrity protection status of the UE according to the user plane security policy 022 may be as follows:

When the user plane ciphering protection policy indicates that enabling is required (required), and ciphering protection is not enabled for the LTE, the target eNB indicates the LTE to enable user plane ciphering protection.

When the user plane ciphering protection policy indicates that enabling is not needed (not needed), and ciphering protection is enabled for the LTE, the target eNB indicates the LTE to disable user plane protection.

When the user plane integrity protection policy indicates that enabling is required (required), and integrity protection is not enabled for the LTE, the target eNB indicates the LTE to enable user plane integrity protection.

When the user plane integrity protection policy indicates that enabling is not needed (not needed), and integrity protection is enabled for the LTE, the target eNB indicates the LTE to disable user plane protection.

It should be understood that the target eNB may adjust the user plane security activation status of the UE based on a status of the target eNB in the following two cases:
When the user plane ciphering protection policy indicates that enabling is preferred (preferred), and ciphering protection is not enabled for the LTE, the target eNB indicates the LTE to enable user plane ciphering protection or skip enabling user plane ciphering protection.

When the user plane integrity protection policy indicates that enabling is preferred (preferred), and integrity protection is not enabled for the LTE, the target eNB indicates the LTE to enable user plane integrity protection or skip enabling user plane integrity protection.

In this embodiment, the target eNB can determine, based on the indication information 011, whether the UE supports on-demand user plane security protection, and the target eNB sends a user plane security policy to the MME only when the UE supports on-demand user plane security protection. This avoids the following case: When the UE does not support on-demand user plane security protection and the MME does not receive a user plane security policy from the target eNB, the MME sends a user plane security policy to the target eNB, and consequently, the target eNB cannot enable on-demand user plane security protection for the UE even if the target eNB receives the user plane security policy. Therefore, this helps reduce a probability that the MME sends, to the target eNB, an information element that is not required by the eNB, and therefore helps reduce transmission complexity.

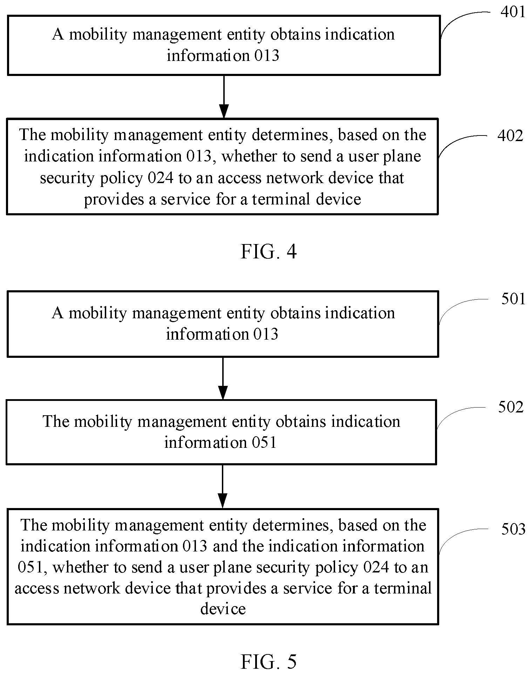

FIG. 4 shows another implementation of the security policy processing method provided in this application. An access network device and a mobility management entity perform the following steps.

Step 401: The mobility management entity obtains indication information 013.

The mobility management entity may obtain the indication information 013 in the following plurality of implementations.

In a possible implementation, the mobility management entity obtains the indication information 013 from a terminal device through an attach process. For example, during network access of the terminal device, the terminal device sends an attach request (attach request) to the mobility management entity, where the attach request carries the indication information 013.

In another possible implementation, the mobility management entity obtains the indication information 013 from the terminal device through a tracking area update process. For example, the terminal device sends a tracking area update request (tracking area update request) to the mobility management entity, where the tracking area update request carries the indication information 013.

In another possible implementation, the mobility management entity obtains the indication information 013 from the terminal device through a packet data network connection establishment process. For example, the terminal device sends a packet data network connectivity request (PDN connectivity request) to the mobility management entity, where the packet data network connectivity request carries the indication information 013. Alternatively, after obtaining the indication information 013 from the terminal device through an attach process or a tracking area update process, the mobility management entity stores the indication information 013 in a context of the terminal device. After obtaining the context of the terminal device based on an identifier of the terminal device (for example, an eNB LTE S1AP ID or an MME LTE S1AP ID) in an S1 message that carries a packet data network connectivity request, the mobility management entity obtains the indication information 013 stored in the context of the terminal device.

In another possible implementation, the mobility management entity obtains the indication information 013 from a target access network device through a path switch request. For example, when an access network device for the terminal device changes, to be specific, when the terminal device is handed over from a source access network device to the target access network device in a handover, resume, or reestablishment scenario or the like, the target access network device sends a path switch request to the mobility management entity, where the path switch request carries the indication information 013. Alternatively, after obtaining the indication information 013 from the terminal device through an attach process, a tracking area update process, or a packet data network connection establishment process, the mobility management entity stores the indication information 013 in a context of the terminal device. After obtaining the context of the terminal device based on an identifier of the terminal device (for example, an eNB UE S1AP ID or an MME UE S1AP ID) in a path switch request, the mobility management entity obtains the indication information 013 stored in the context of the terminal device.

In this embodiment, the indication information 013 may be obtained by the mobility management entity in any one of the foregoing implementations. This is not specifically limited herein.

The indication information 013 indicates whether the terminal device supports on-demand user plane security protection. Alternatively, further, the indication information 013 indicates whether the terminal device supports on-demand user plane security protection between the terminal device and an access network device. Whether the terminal device supports on-demand user plane security protection may be understood as whether the terminal device supports enabling of user plane ciphering protection and/or supports enabling of user plane integrity protection, that is, user plane ciphering protection and/or user plane integrity protection for the terminal device are not fixed. Whether the terminal device supports on-demand user plane security protection between the terminal device and an access network device may be understood as whether the terminal device supports enabling/disabling of user plane ciphering protection and/or user plane integrity protection under an indication by the access network device. The access network device herein may be an eNB, for example, a source eNB or a target eNB mentioned in the following descriptions. It should be understood that a plurality of expressions of the indication information 013 are interchangeable. In subsequent embodiments, the expression that "the indication information 013 indicates whether the terminal device supports on-demand user plane security protection" is used as an example for description.

Specifically, the indication information 013 may be represented by a part of bits of an evolved packet system security capability of the terminal device, and the evolved packet system security capability of the terminal device indicates at least one security algorithm supported by the terminal device. For example, the evolved packet system security capability of the terminal device is a UE evolved packet system security capability (UE EPS security capabilities), and the indication information 013 may be indicated by a reserved bit, for example, EEA7 or EIA7, in the UE security capability. The EEA7 represents a bit reserved for an 8^{th} ciphering algorithm in the LTE evolved packet system security capability, and the EIA7 represents a bit reserved for an 8^{th} integrity algorithm in the UE evolved packet system security capability. In this embodiment, the bit is used to carry an indication indicating whether the terminal device supports on-demand user plane security protection.

It should be noted that the indication information 013 in this implementation and the indication information 011 in the foregoing implementation may be same indication information, or may be different indication information. However, both the indication information 011 and the indication information 013 indicate whether the terminal device supports on-demand user plane security protection.

Regardless of whether the access network device is upgraded (to be specific, whether the access network device supports on-demand user plane security protection), the access network device can identify and forward the evolved packet system security capability of the terminal device (for example, the LTE evolved packet system security capability). Similarly, regardless of whether the terminal device is upgraded (to be specific, whether the terminal device supports on-demand user plane security protection), the terminal device can send the evolved packet system security capability of the terminal device (for example, the UE evolved packet system security capability). Therefore, adding the indication information 013 to the evolved packet system security capability of the terminal device can ensure that the indication information 013 is not lost during transmission. However, in the conventional technology, redefined indication information indicates whether a terminal device supports on-demand user security protection, and the redefined indication information cannot be identified by an unupgraded access network device (or an unupgraded terminal device). To be specific, an access network device that does not support on-demand user plane security protection cannot identify the redefined indication information. If the access network device that does not support on-demand user plane security protection receives the redefined indication information, the access network device that does not support on-demand user plane security protection discards the redefined indication information, and cannot send the redefined indication information to a mobility management entity or the like. Similarly, a terminal device that does not support on-demand user plane security protection cannot identify the redefined indication information. If the access network device that does not support on-demand user plane security protection receives the redefined indication information, the access network device that does not support on-demand user plane security protection discards the redefined indication information, and cannot send the redefined indication information to the mobility management entity or the like.

Step 402: The mobility management entity determines, based on the indication information 013, whether to send a user plane security policy 024 to an access network device that provides a service for the terminal device.

In an optional implementation, the indication information 013 is carried in a path switch request 034, and the access network device that provides a service for the terminal device is the target access network device. In this case, that the mobility management entity determines, based on the indication information 013, whether to send a user plane security policy 024 to an access network device that provides a service for the terminal device may be specifically as follows: When the indication information 013 indicates that the terminal device supports on-demand user plane security protection, and the path switch request 034 carries no user plane security policy, the mobility management entity sends, to the target access network device, a path switch response 044 that carries the user plane security policy 024.

In another optional implementation, the indication information 013 is carried in a non-access stratum (non-access stratum, NAS) message, and the non-access stratum message includes an attach request (attach request), a location update request (update location request), or the like. The access network device that provides a service for the terminal device is the source access network device. In this case, that the mobility management entity determines, based on the indication information 013, whether to send a user plane security policy 024 to an access network device that provides a service for the terminal device may be specifically as follows: When the indication information 013 indicates that the terminal device supports on-demand user plane security protection, the mobility management entity sends the user plane security policy 024 to the source access network device.

In another optional implementation, after obtaining the indication information 013 from the terminal device through an attach process or a tracking area update process, the mobility management entity stores the indication information 013 in the context of the terminal device. After obtaining the context of the terminal device based on an identifier of the terminal device (for example, an eNB UE S1AP ID or an MME UE S1AP ID) in an S 1 message that carries a packet data network connectivity request, the mobility management entity obtains the indication information 013 stored in the context of the terminal device. In this case, the access network device that provides a service for the terminal device is the source access network device. In this case, that the mobility management entity determines, based on the indication information 013, whether to send a user plane security policy 024 to an access network device that provides a service for the terminal device may be specifically as follows: When the indication information 013 stored on the MME indicates that the terminal device supports on-demand user plane security protection, the mobility management entity sends the user plane security policy 024 to the source access network device.

It should be noted that, in the foregoing several implementations, the user plane security policy 024 sent by the mobility management entity to the access network device may come from a home subscriber server HSS, or may be preconfigured on the mobility management entity.

Specifically, after obtaining the indication information 013 and before sending the user plane security policy 024 to the access network device, the mobility management entity receives subscription data of the terminal device from the home subscriber server. The subscription data is data stored on the home subscriber server during subscription of the terminal device, and the subscription data may include a user plane security policy for the terminal device. It should be understood that the user plane security policy may be determined during subscription. To be specific, during subscription, the terminal device subscribes to a service that requires on-demand user plane security protection. Alternatively, the subscription data may not include a user plane security policy. This may be understood as that, during subscription, the terminal device does not subscribe to a service that requires on-demand user plane security protection.

In a possible implementation, if the subscription data includes the user plane security policy 024 and the indication information 013 indicates that the terminal device supports on-demand user plane security protection, the mobility management entity stores the user plane security policy 024. In this case, the user plane security policy sent by the mobility management entity to the access network device (the source access network device or the target access network device) in step 402 may be the user plane security policy 024 that comes the home subscriber server and that is stored by the mobility management entity on the mobility management entity.

In another possible implementation, a user plane security policy is preconfigured on the mobility management entity, and the subscription data does not include a user plane security policy, but the indication information 013 indicates that the terminal device supports on-demand user plane security protection. In this case, the mobility management entity uses the preconfigured user plane security policy as the user plane security policy 024, and stores the user plane security policy 024 in the context of the terminal device. In this case, the user plane security policy sent by the mobility management entity to the access network device (the source access network device or the target access network device) in step 402 may be the user plane security policy 024 that is configured by the mobility management entity and that is stored by the mobility management entity on the mobility management entity.

Optionally, the user plane security policy obtained by the mobility management entity from the HSS or preconfigured on the mobility management entity is at an access point name (access point name, APN) granularity. After mapping the user plane security policy at the APN granularity to a user plane security policy at an E-RAB granularity, the mobility management entity obtains the user plane security policy 024 at an E-RAB granularity. In this case, the user plane security policy sent by the mobility management entity to the access network device (the source access network device or the target access network device) in step 402 is one or more user plane security policies 024, and each user plane security policy 024 corresponds to one E-RAB, that is, each user plane security policy 024 is a security policy at an E-RAB granularity. Specifically, the mobility management entity sends, to the access network device (the source access network device or the target access network device), the user plane security policy 024 together with an identifier of an E-RAB corresponding to the user plane security policy 024.

In this embodiment, the mobility management entity can determine, based on the indication information 013, whether the terminal device supports on-demand user plane security protection; and when the terminal device supports on-demand user plane security protection, further determines whether to send a user plane security policy to the access network device that provides a service for the terminal device. Therefore, this also helps reduce a probability that the mobility management entity sends, to the access network device, an information element that is not required by the access network device, and therefore helps reduce transmission complexity.

FIG. 5 shows another implementation of the security policy processing method provided in this application. An access network device and a mobility management entity perform the following steps.

Step 501: The mobility management entity obtains indication information 013.

The indication information 013 indicates whether a terminal device supports on-demand user plane security protection. Specifically, the indication information 013 indicates whether the terminal device supports user plane ciphering protection and/or user plane integrity protection. The indication information 013 is represented by a part of bits of an evolved packet system security capability of the terminal device, and the evolved packet system security capability of the terminal device indicates at least one security algorithm supported by the terminal device.

In this embodiment, step 501 is similar to step 401. For details, refer to related descriptions in step 401.

Step 502: The mobility management entity obtains indication information 051.

The indication information 051 indicates whether an access network device that provides a service for the terminal device supports on-demand user plane security protection. Alternatively, further, the indication information 051 indicates whether the access network device supports on-demand user plane security protection between the access network device and the terminal device. Whether the access network device supports on-demand user plane security protection may be understood as whether the access network device supports enabling of user plane ciphering protection and/or supports enabling of user plane integrity protection, that is, user plane ciphering protection and/or user plane integrity protection for the access network device are not fixed. Whether the access network device supports on-demand user plane security protection between the access network device and the terminal device may be understood as whether the access network device can indicate the terminal device to enable/skip enabling user plane ciphering protection and/or user plane integrity protection. It should be understood that a plurality of expressions of the indication information 051 are interchangeable. In subsequent embodiments, the expression that "the indication information 051 indicates whether the access network device supports on-demand user plane security protection" is used as an example for description.

Specifically, the mobility management entity may obtain the indication information 051 in a plurality of manners, specifically, including the following several implementations.

In an optional implementation, that the indication information 051 is indication information 051-1 received by the mobility management entity from the access network device. This may also be understood as that the mobility management entity receives the indication information 051-1 from the access network device. For example, if the access network device is a target access network device, the target access network device may add the indication information 051-1 to a path switch request to be sent to the mobility management entity. Certainly, the access network device may alternatively send the indication information 051-1 to the mobility management entity by using other signaling between the access network device and the mobility management entity. This is not specifically limited in this application.

In another optional implementation, the indication information 051 is indication information 051-2 obtained by the mobility management entity from a network management device. This may be understood as that the mobility management entity obtains the indication information 051-2 from the network management device. The network management device is a device capable of managing related information of the access network device. For example, the network management device may be an operation, administration, and maintenance (operation administration and maintenance, OAM) network element.

It should be noted that there is no chronological order between step 501 and step 502. To be specific, the mobility management entity may first obtain the indication information 013 and then obtain the indication information 051, the mobility management entity may first obtain the indication information 051 and then obtain the indication information 013, or the mobility management entity may simultaneously obtain the indication information 013 and the indication information 051. This is not specifically limited herein.

Step 503: The mobility management entity determines, based on the indication information 013 and the indication information 051, whether to send a user plane security policy 024 to the access network device that provides a service for the terminal device.

Specifically, when the indication information 013 indicates that the terminal device supports on-demand user plane security protection, and the indication information 051 indicates that the access network device that provides a service for the terminal device supports on-demand user plane security protection, the mobility management entity sends the user plane security policy 024 for the terminal device to the access network device. That is, when the mobility management entity determines that both the access network device and the terminal device support on-demand user plane security protection, regardless of whether the mobility management entity receives a user plane security policy, the mobility management entity sends the user plane security policy 024 to the access network device. In this case, the user plane security policy 024 sent by the mobility management entity to the access network device can be identified by the access network device. In addition, the access network device is capable of determining, according to the user plane security policy 024, whether to enable user plane ciphering protection and/or user plane integrity protection for the terminal device. Therefore, in this case, that the mobility management entity sends the user plane security policy 024 to the access network device does not cause waste of an information element.

Specifically, after obtaining the indication information 051 and before sending the user plane security policy 024 to the access network device, the mobility management entity receives subscription data of the terminal device from a home subscriber server. The subscription data may be determined during subscription. For details about descriptions of the subscription data, refer to descriptions in step 402. Details are not described herein again.

In a possible implementation, the subscription data includes the user plane security policy 024, the indication information 013 indicates that the terminal device supports on-demand user plane security protection, and the indication information 051 indicates that the access network device supports on-demand user plane security protection. In this case, the mobility management entity stores the user plane security policy 024. In this case, the user plane security policy sent by the mobility management entity to the access network device (a source access network device or the target access network device) in step 503 may be the user plane security policy 024 that comes the home subscriber server and that is stored by the mobility management entity on the mobility management entity.

In another possible implementation, a user plane security policy is preconfigured on the mobility management entity, and the subscription data does not include a user plane security policy, but the indication information 013 indicates that the terminal device supports on-demand user plane security protection, and the indication information 051 indicates that the access network device supports on-demand user plane security protection. In this case, the mobility management entity uses the preconfigured user plane security policy as the user plane security policy 024, and stores the user plane security policy 024 in a context of the terminal device. In this case, the user plane security policy sent by the mobility management entity to the access network device (the source access network device or the target access network device) in step 503 may be the user plane security policy 024 that is configured by the mobility management entity and that is stored by the mobility management entity on the mobility management entity.

Optionally, the user plane security policy obtained by the mobility management entity from the HSS or preconfigured on the mobility management entity is at an access point name (access point name, APN) granularity. After mapping the user plane security policy at the APN granularity to a user plane security policy at an E-RAB granularity, the mobility management entity obtains the user plane security policy 024 at an E-RAB granularity. In this case, the user plane security policy sent by the mobility management entity to the access network device (the source access network device or the target access network device) in step 402 is one or more user plane security policies 024, and each user plane security policy 024 corresponds to one E-RAB, that is, each user plane security policy 024 is a security policy at an E-RAB granularity. Specifically, the mobility management entity sends, to the access network device (the source access network device or the target access network device), the user plane security policy 024 together with an identifier of an E-RAB corresponding to the user plane security policy 024.

In this embodiment, the mobility management entity can determine, based on the indication information 013, whether the terminal device supports on-demand user plane security protection, and can determine, based on the indication information 051, whether the access network device supports on-demand user plane security protection. The mobility management entity sends the user plane security policy 024 to the access network device only when both the terminal device and the access network device support on-demand user plane security protection, to ensure that the access network device is capable of enabling user plane ciphering protection and/or user plane integrity protection for the terminal device by using the user plane security policy 024. Therefore, the mobility management entity can be prevented from sending a user plane security policy to an access network device that does not support on-demand user plane security protection. This helps reduce a probability that the mobility management entity sends, to the access network device, an information element that is not required by the access network device, and therefore helps reduce transmission complexity.

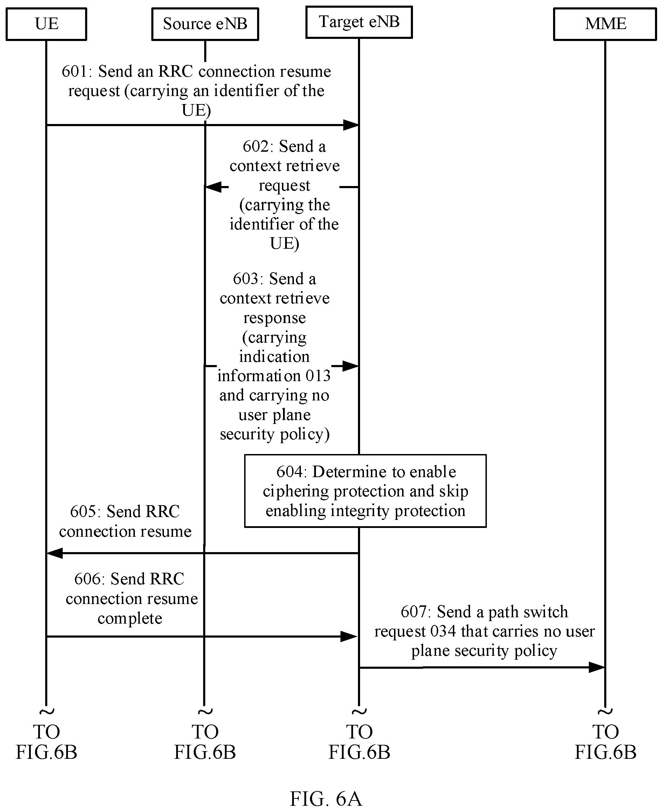

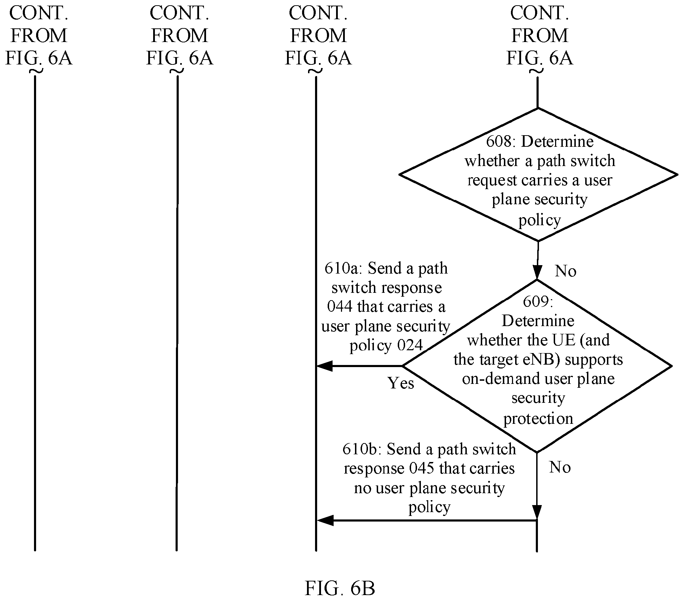

The security policy processing method described in the embodiment corresponding to FIG. 4 or FIG. 5 may be applied to any one of the following processes: handover (Handover), RRC connection resume (RRC Connection Resume), and RRC connection reestablishment (RRC Connection Reestablishment). An RRC connection resume process shown in FIG. 6A and FIG. 6B is used as an example below for further description. A target eNB is an implementation of the foregoing target access network device, a source eNB is an implementation of the foregoing source access network device, an MME is an implementation of the foregoing mobility management entity, and an HSS is an implementation of the foregoing home subscriber server. In addition, it is assumed that the target eNB is an upgraded eNB (to be specific, an eNB that supports on-demand user plane security protection), and the source eNB is an unupgraded eNB (to be specific, an eNB that does not support on-demand user plane security protection). The foregoing devices perform the following steps.

Step 601: UE sends an RRC connection resume request (RRC connection resume request) to the target eNB. Correspondingly, the target eNB receives the RRC connection resume request from the UE.

The RRC connection resume request carries an identifier (for example, an I-RNTI or a resume ID) of the LTE, and the RRC connection resume request indicates that the LTE needs to resume a connection to the target eNB.

Step 602: The target eNB sends a context retrieve request (context retrieve request) to the source eNB. Correspondingly, the source eNB receives the context retrieve request from the target eNB.

The context retrieve request carries the identifier of the UE, and the context retrieve request is used to obtain a context of the UE from the source eNB.

Step 603: The source eNB sends a context retrieve response (context retrieve response) to the target eNB. Correspondingly, the target eNB receives the context retrieve response from the source eNB.

The context retrieve response carries indication information 013, and carries no user plane security policy. The indication information 013 indicates whether the UE supports on-demand user plane security protection. Alternatively, further, the indication information 013 indicates whether the UE supports on-demand user plane security protection between the UE and the eNB. Whether the LTE supports on-demand user plane security protection may be understood as whether the UE supports enabling of user plane ciphering protection and/or supports enabling of user plane integrity protection, that is, user plane ciphering protection and/or user plane integrity protection for the UE are not fixed. Whether the UE supports on-demand user plane security protection between the LTE and the eNB may be understood as whether the LTE supports enabling/disabling of user plane ciphering protection and/or user plane integrity protection under an indication by the eNB. It should be understood that a plurality of expressions of the indication information 013 are interchangeable. In subsequent embodiments, the expression that "the indication information 013 indicates whether the UE supports on-demand user plane security protection" is used as an example for description.

In addition, the indication information 013 is carried in a UE evolved packet system security capability (UE EPS security capabilities), and is indicated by a reserved bit, for example, EEA7 or EIA7, in the UE security capability. The EEA7 represents a bit reserved for an 8^{th} ciphering algorithm in the UE evolved packet system security capability, and the EIA7 represents a bit reserved for an 8^{th} integrity algorithm in the UE evolved packet system security capability. In this embodiment, the bit is used to carry an indication indicating whether the terminal device supports on-demand user plane security protection. For descriptions of the indication information 013, refer to descriptions in step 201 or step 401. Details are not described herein again.

Step 604: The target eNB determines to enable user plane ciphering protection and skip enabling user plane integrity protection.

The context retrieve response received by the target eNB carries no user security policy. Therefore, the target eNB may enable security protection for the UE in a default manner (which may be understood as an unupgraded manner). To be specific, user plane ciphering protection is always enabled by using an algorithm the same as that used for RRC protection, but user plane integrity protection is not enabled. Usually, a state, determined by the target eNB, in which user plane ciphering protection is enabled and user plane integrity protection is not enabled may be referred to as a user plane security activation status, and the user plane security activation status is a decision result of the target eNB about whether to enable user plane ciphering protection and/or user plane integrity protection for the UE. The target eNB needs to transmit the decision result to the UE, so that the UE enables user plane ciphering protection and skips enabling user plane integrity protection based on the user plane security activation status. Therefore, the target eNB performs step 605.

Step 605: The target eNB sends RRC connection resume (RRC connection resume) to the UE. Correspondingly, the UE receives the RRC connection resume from the target eNB.

The RRC connection resume message indicates, to the UE, that the target eNB agrees to the RRC connection resume request of the UE. The RRC connection resume message carries the user plane security activation status, to be specific, the state in which user plane ciphering protection is enabled and user plane integrity protection is not enabled.

The RRC connection resume message includes DRB configuration information. The DRB configuration information indicates the LTE whether to enable ciphering protection and/or integrity protection for a DRB. Usually, if a ciphering disabled (ciphering disabled) field is encapsulated in the DRB configuration information, the LTE does not enable ciphering protection for the DRB; or if no ciphering disabled (ciphering disabled) field is encapsulated in the DRB configuration information, the UE enables ciphering protection for the DRB. If an integrity protection (integrity protection) field is encapsulated in the DRB configuration information, the LTE enables integrity protection for the DRB; or if no integrity protection (integrity protection) field is encapsulated in the DRB configuration information, the UE does not enable integrity protection for the DRB.

For example, when the target eNB determines that ciphering activation statuses corresponding to all DRBs of the LTE are enabled and integrity activation statuses corresponding to the DRBs are not enabled, the RRC connection resume message does not include DRB configuration information.

In an optional implementation, the RRC connection resume message includes the user plane security activation status indicated by the target eNB to the UE. This may be understood as that the RRC connection resume message includes the DRB configuration information determined by the target eNB. In this case, the target eNB explicitly indicates the UE to skip enabling user plane ciphering protection and/or enable user plane integrity protection.

For example, when the DRB configuration information carried in the RRC connection resume message is the ciphering disabled (ciphering disabled) field and the integrity protection (integrity protection) field, this may be understood as that the target eNB explicitly sends the user plane security activation status to the UE.

In another optional implementation, the RRC connection resume message does not include DRB configuration information. In this case, the target eNB implicitly indicates the LTE to enable user plane ciphering protection and/or skip enabling user plane integrity protection. This may be understood as that the target eNB implicitly sends the user plane security activation status to the UE.

For example, when the RRC connection resume message does not carry the ciphering disabled (ciphering disabled) field or the integrity protection (integrity protection) field, this may be understood as that the target eNB implicitly indicates the UE to enable user plane ciphering protection and skip enabling user plane integrity protection.

In addition, there may alternatively be another implementation. For example, when the DRB configuration information carried in the RRC connection resume message includes only the ciphering disabled (ciphering disabled) field, this may be understood as that the target eNB explicitly indicates the LTE to skip enabling user plane ciphering protection, and implicitly indicates the UE to skip enabling user plane integrity protection. For another example, when the DRB configuration information carried in the RRC connection resume message includes only the integrity protection (integrity protection) field, this may be understood as that the target eNB implicitly indicates the UE to enable user plane ciphering protection, and explicitly indicates the LTE to enable user plane integrity protection.

Step 606: The UE sends RRC connection resume complete (RRC connection resume complete) to the target eNB. Correspondingly, the target eNB receives the RRC connection resume complete from the UE.

After the UE receives the RRC connection resume message, the UE enables or disables user plane ciphering protection and/or user plane integrity protection based on the user plane security activation status carried in the RRC connection resume message. After configuration is completed, the UE sends the RRC connection resume complete message to the target eNB. The RRC connection resume complete message indicates that the LTE has performed configuration based on an indication in the RRC connection resume message and has completed the RRC connection resume process.

Step 607: The target eNB sends, to the MME, a path switch request 034 that carries no user plane security policy. Correspondingly, the MME receives, from the target eNB, the path switch request 034 that carries no user plane security policy.

Optionally, the path switch request 034 carries the indication information 013, and the indication information 013 is received by the target eNB from the source eNB in step 603. The target eNB receives no user plane security policy from the source eNB. To be specific, the context retrieve response described in step 603 carries no user plane security policy. Therefore, the path switch request 034 carries no user plane security policy either. Specifically, for descriptions of the indication information 013, refer to step 401.

Optionally, the path switch request 034 further includes indication information 051, and the indication information 051 indicates whether the target eNB that provides a service for the UE supports on-demand user plane security protection. Specifically, for descriptions of the indication information 051, refer to step 502.

Step 608: The MME determines whether a path switch request carries a user plane security policy.

If the path switch request carries no user plane security policy, for example, the path switch request is the path switch request 034, the MME performs step 609. If the path switch request carries a user plane security policy, the MME determines whether a user plane security policy on the MME is the same as the user plane security policy carried in the path switch request, and determines, based on a determining result, whether to add the user plane security policy to a path switch response to be sent to the target eNB. For details, refer to related descriptions in step 309b to step 312 in the embodiment corresponding to FIG. 3A and FIG. 3B. Details are not described herein again.

Step 609: The MME determines whether the LTE (and the target eNB) supports on-demand user plane security protection.

Specifically, the MME determines, based on the indication information 013 (and the indication information 051), whether the UE (and the target eNB) supports on-demand user plane security protection.

In an optional implementation, the MME may determine only whether the LTE supports on-demand user plane security protection. To be specific, the MME determines, based on the indication information 013 received in step 607, whether the UE supports on-demand user plane security protection. In this case, if the UE supports on-demand user plane security protection, the MME performs step 610a; or if the UE does not support on-demand user plane security protection, the MME performs step 610b.

In another optional implementation, the MME needs to determine whether both the UE and the target eNB support on-demand user plane security protection. To be specific, the MME determines, based on the indication information 013, whether the UE supports on-demand user plane security protection; and determines, based on the indication information 051, whether the target eNB supports on-demand user plane security protection. In this case, if the UE and the target eNB support on-demand user plane security protection, the MME performs step 610a; or if the UE does not support on-demand user plane security protection or the target eNB does not support on-demand user plane security protection, the MME performs step 610b.

Step 610a: The MME sends, to the target eNB, a path switch response 044 that carries a user plane security policy 024. Correspondingly, the target eNB receives, from the MME, the path switch response 044 that carries the user plane security policy 024.

Step 610b: The MME sends, to the target eNB, a path switch response 045 that carries no user plane security policy. Correspondingly, the target eNB receives, from the MME, the path switch response 045 that carries no user plane security policy.

In this implementation, determining logic is added on the MME side. To be specific, when the MME determines whether to send a user plane security policy to the eNB, the MME makes a decision based on the indication information 013. However, in the conventional technology, an MME makes a decision only based on whether a user plane security policy is received from an eNB. If no user plane security policy is received from the eNB, the MME sends a user plane security policy to the eNB. In the solution of the conventional technology, the eNB may not be able to send a user plane security policy to the MME because LTE does not support on-demand user plane security protection. In this case, when the MME sends a user plane security policy to the eNB, the eNB cannot enable user plane integrity protection for the UE by using the user plane security policy. Consequently, efficiency of signaling transmission between the MME and the eNB is reduced. However, in the solution of this application, the MME sends a user plane security policy to the eNB only when the LTE supports on-demand user plane security protection. Therefore, this helps reduce a probability that the MME sends, to the eNB, an information element that is not required by the eNB, and therefore helps reduce transmission complexity.

It should be further understood that, after the target eNB receives the user plane security policy 024 from the MME, the target eNB stores the user plane security policy 024 in the context of the UE. In addition, when a user plane security activation status indicated by the user plane security policy 024 does not match a current user plane security activation status of the UE, the target eNB enables or disables ciphering protection and/or integrity protection for the UE according to the user plane security policy 024. For details, refer to related descriptions in step 311 and step 312. Details are not described herein again.

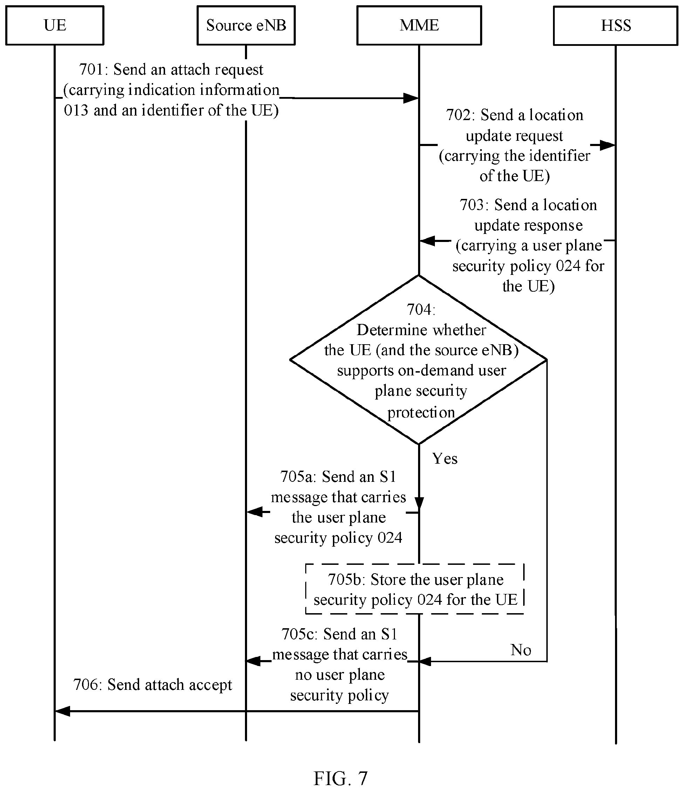

In addition, the security policy processing method described in the embodiment corresponding to FIG. 4 or FIG. 5 may alternatively be applied to an initial access process. FIG. 7 is used as an example below for further description. A source eNB is an implementation of the foregoing source access network device, an MME is an implementation of the foregoing mobility management entity, and an HSS is an implementation of the foregoing home subscriber server. The foregoing devices perform the following steps.

Step 701: UE sends an attach request (attach request) to the MME.

The attach request carries indication information 013 and an identifier of the UE. Specifically, the indication information 013 indicates whether the UE supports user plane ciphering protection and/or user plane integrity protection. The indication information 013 is represented by a part of bits of an evolved packet system security capability of the UE, and the evolved packet system security capability of the LTE indicates at least one security algorithm supported by the UE. For details, refer to related descriptions in step 401.

Step 702: The MME sends a location update request to the HSS.

The location update request carries the identifier of the UE. The location update request is used to request subscription data of the UE that is stored on the HSS. The subscription data may include a user plane security policy for the terminal device. It should be understood that the user plane security policy may be determined during subscription. To be specific, during subscription, the terminal device subscribes to a service that requires on-demand user plane security protection. Alternatively, the subscription data may not include a user plane security policy. This may be understood as that, during subscription, the terminal device does not subscribe to a service that requires on-demand user plane security protection.

Optionally, the user plane security policy on the HSS is at an APN granularity. One user plane security policy corresponds to an identifier of one APN.

Step 703: The HSS sends a location update response to the MME.

The location update response carries the subscription data of the UE, and the subscription data includes a user plane security policy 024 for the UE. Certainly, the subscription data further includes other information of the UE. Details are not described herein.

Step 704: The MME determines whether the LTE (and the source eNB) supports on-demand user plane security protection.

It should be understood that, there is no chronological order between step 702 to step 703 and step 704, provided that step 704 is performed after step 701. To be specific, after the MME receives the indication information 013 and the ID of the UE that are carried in the attach request, the MME determines, based on the indication information 013, whether the LTE supports on-demand user plane security protection; and the MME sends, to the HSS, the location update request that carries the identifier of the UE, to obtain the subscription data of the UE.

In an optional implementation, the MME may determine only whether the LTE supports on-demand user plane security protection. To be specific, the MME determines, based on the indication information 013 received in step 701, whether the UE supports on-demand user plane security protection.

In this implementation, when the UE supports on-demand user plane security protection, the MME sequentially performs step 705a and step 705b; or when the LTE does not support on-demand user plane security protection, the MME performs step 705c.

In another optional implementation, the MME needs to determine whether both the UE and the target eNB support on-demand user plane security protection. To be specific, the MME determines, based on the indication information 013, whether the UE supports on-demand user plane security protection; and determines, based on indication information 051, whether the target eNB supports on-demand user plane security protection. The indication information 051 may be obtained by the MME through signaling interaction with the source eNB, or may be obtained by the MME from a network management device. This is not specifically limited herein.

In this implementation, when both the UE and the source eNB support on-demand user plane security protection, the MME sequentially performs step 705a and step 705b, or the MME performs only step 705a; or when the UE does not support on-demand user plane security protection or the source eNB does not support on-demand user plane security protection, the MME performs step 705c.

Step 705a: The MME sends, to the source eNB, an S1 message that carries the user plane security policy 024.

The S1 message carries the indication information 013 and the user plane security policy 024 for the UE. The S1 message may be an initial context setup request (initial context setup request) message.

Optionally, the MME obtains a user plane security policy at an APN granularity from the HSS, and after mapping the user plane security policy at the APN granularity to a user plane security policy 024 at an E-RAB granularity, the MME obtains one or more user plane security policies 024 at an E-RAB granularity.

In this case, the user plane security policy sent by the MME to the source eNB in step 705a is one or more user plane security policies 024, and each user plane security policy 024 corresponds to one E-RAB, that is, each user plane security policy 024 is a security policy at an E-RAB granularity. Specifically, the MME sends, to the source eNB, the user plane security policy 024 together with an identifier of an E-RAB corresponding to the user plane security policy 024.

Step 705b: The MME stores the user plane security policy 024 for the UE.

In this embodiment, step 705b is an optional step.

When the MME performs step 705b, there is no chronological order between step 705a and step 705b. To be specific, the MME may perform step 705a before step 705b, or the MME may perform step 705b before step 705a, or the MME may simultaneously perform steps 705a and 705b.

Step 705c: The MME sends, to the source eNB, an S1 message that carries no user plane security policy.

Step 706: The MME sends attach accept (attach accept) to the UE.

The attach accept message indicates the UE to complete an attach process.

In this implementation, determining logic is added on the MME side. To be specific, when the MME determines whether to send a user plane security policy to the source eNB, the MME makes a decision based on the indication information 013 (and the indication information 051). However, in the conventional technology, an MME makes a decision only based on whether a user plane security policy is obtained from an HSS through querying. If the location update response returned by the HSS carries a user plane security policy, the MME sends the user plane security policy to the source eNB; otherwise, the MME does not send a user plane security policy to the source eNB.

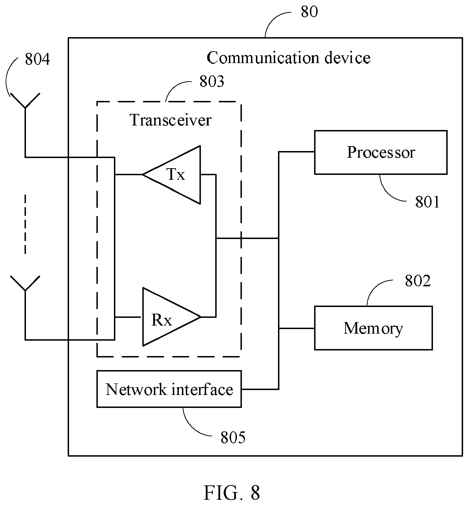

FIG. 8 is a schematic diagram of a structure of a communication device 80 according to this application. Both the target access network device in the method embodiment corresponding to FIG. 2 and the target eNB in the method embodiment corresponding to FIG. 3A and FIG. 3B may be based on the structure of the communication device 80 shown in FIG. 8 in this embodiment.

The communication device 80 includes at least one processor 801, at least one memory 802, and at least one transceiver 803. Optionally, the communication device 80 may further include at least one network interface 805 and one or more antennas 804. The processor 801, the memory 802, the transceiver 803, and the network interface 805 are connected through a connection apparatus, and the antenna 804 is connected to the transceiver 803. The connection apparatus may include various interfaces, transmission cables, buses, or the like. This is not limited in this embodiment.

The processor 801 is mainly configured to process a communication protocol and communication data, control an entire network device, execute a software program, and process data of the software program, for example, is configured to enable the communication device 80 to perform the actions described in the foregoing embodiments. The communication device 80 may include a baseband processor and a central processing unit. The baseband processor is mainly configured to process the communication protocol and the communication data. The central processing unit is mainly configured to control the entire communication device 80, execute the software program, and process the data of the software program. The processor 801 in FIG. 8 may integrate the functions of the baseband processor and the central processing unit. It should be understood that the baseband processor and the central processing unit may alternatively be processors independent of each other and are interconnected by using a technology such as a bus. It should be further understood that the communication device 80 may include a plurality of baseband processors to adapt to different network standards, the communication device 80 may include a plurality of central processing units to enhance a processing capability of the communication device 80, and the components of the communication device 80 may be connected through various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the memory in a form of a software program, and the processor executes the software program to implement a baseband processing function.

In addition, the memory 802 is mainly configured to store the software program and data. The memory 802 may exist independently, and is connected to the processor 801. Optionally, the memory 802 and the processor 801 may be integrated, for example, integrated into one or more chips. The memory 802 can store program code for executing technical solutions in embodiments of this application, and the processor 801 controls execution of the program code. Various types of executed computer program code may also be considered as drivers of the processor 801. It should be understood that FIG. 8 in this embodiment shows only one memory and one processor. However, in actual application, the communication device 80 may include a plurality of processors or a plurality of memories. This is not specifically limited herein. In addition, the memory 802 may also be referred to as a storage medium, a storage device, or the like. The memory 802 may be a storage element (namely, an on-chip storage element) located on a same chip with the processor, or may be an independent storage element. This is not limited in this embodiment of this application.

In this embodiment, the transceiver 803 may be configured to support receiving or sending of a radio frequency signal between the communication device 80 and a terminal device (or another network device), and the transceiver 803 may be connected to the antenna 804. The transceiver 803 includes a transmitter Tx and a receiver Rx. Specifically, the one or more antennas 804 may receive a radio frequency signal. The receiver Rx of the transceiver 803 is configured to receive the radio frequency signal from the antenna 804, convert the radio frequency signal into a digital baseband signal or a digital intermediate-frequency signal, and provide the digital baseband signal or the digital intermediate-frequency signal for the processor 801, so that the processor 801 further processes the digital baseband signal or the digital intermediate-frequency signal, for example, performs demodulation and decoding. In addition, the transmitter Tx in the transceiver 803 is further configured to receive a modulated digital baseband signal or digital intermediate-frequency signal from the processor 801, convert the modulated digital baseband signal or digital intermediate-frequency signal into a radio frequency signal, and transmit the radio frequency signal through the one or more antennas 804. Specifically, the receiver Rx may selectively perform one or more levels of frequency down-mixing and analog-to-digital conversion on the radio frequency signal to obtain the digital baseband signal or the digital intermediate-frequency signal, where a sequence of the frequency down-mixing and the analog-to-digital conversion is adjustable. The transmitter Tx may selectively perform one or more levels of frequency up-mixing and digital-to-analog conversion on the modulated digital baseband signal or digital intermediate-frequency signal to obtain the radio frequency signal, where a sequence of the frequency up-mixing and the digital-to-analog conversion is adjustable. The digital baseband signal and the digital intermediate-frequency signal may be collectively referred to as a digital signal.

It should be understood that the transceiver 803 may also be referred to as a transceiver unit, a transceiver device, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

In addition, the network interface 805 is configured to connect the communication device 80 to another communication device through a communication link. Specifically, the network interface 805 may include a network interface between the communication device 80 and a core network element, for example, an S1-U interface between the communication device 80 and an MME, or an S1-MME interface between the communication device 80 and an S-GW. The network interface 805 may also include a network interface between the communication device 80 and a terminal device, for example, an LTE-Uu interface.

Specifically, the processor 801 controls the transceiver 803 to receive a message 001 from a source access network device, where the message 001 includes indication information 011. In addition, when the indication information 011 indicates that a terminal device supports on-demand user plane security protection between the terminal device and an access network device, the processor 801 controls the transceiver 803 to send, to a mobility management entity, a path switch request 031 that carries a user plane security policy 021, where the user plane security policy 021 indicates whether to enable user plane ciphering protection and/or whether to enable user plane integrity protection.

In an optional implementation, the processor 801 is configured to: determine that a user plane security activation status between the access network device and the terminal device is that user plane ciphering protection is enabled and user plane integrity protection is not enabled; and construct a user plane security policy 021-1 that matches the user plane security activation status.

In an optional implementation, the processor 801 is further configured to: control the transceiver 803 to receive a path switch response 041 from the mobility management entity, where the path switch response 041 carries a user plane security policy 022; and store the user plane security policy 022 in a context of the terminal device.

In an optional implementation, the processor 801 is further configured to: when a current user plane security activation status of the terminal device does not match the user plane security policy 022, enable or skip enabling user plane ciphering protection and/or user plane integrity protection for the terminal device according to the user plane security policy 022, where the current user plane security activation status is a status of whether user plane ciphering protection and/or user plane integrity protection are currently enabled between a target access network device and the terminal device.

In an optional implementation, the processor 801 is further configured to: when the indication information 011 indicates that the terminal device does not support on-demand user plane security protection between the terminal device and an access network device, control the transceiver 803 to send, to the mobility management entity, a path switch request 032 that carries no user plane security policy; and control the transceiver 803 to receive, from the mobility management entity, a path switch response 042 that carries no user plane security policy.

In an optional implementation, the processor 801 is further configured to: when the indication information 011 indicates that the terminal device does not support on-demand user plane security protection between the terminal device and an access network device, control the transceiver 803 to send, to the mobility management entity, a path switch request 033 that carries no user plane security policy, where the path switch request 033 carries the indication information 011.

In an optional implementation, the processor 801 is further configured to: control the transceiver 803 to receive, from the mobility management entity, a path switch response 043 that carries a user plane security policy 023; and store the user plane security policy 023 in the context of the terminal device.

In an optional implementation, the processor 801 is further configured to: when a current user plane security activation status of the terminal device does not match the user plane security policy 023, enable or skip enabling user plane ciphering protection and/or user plane integrity protection for the terminal device according to the user plane security policy 023, where the current user plane security activation status is a status of whether user plane ciphering protection and/or user plane integrity protection are currently enabled between a target access network device and the terminal device.

For other content, refer to the method for the target access network device or the target eNB in the embodiment of FIG. 2 or FIG. 3A and FIG. 3B. Details are not described herein again.

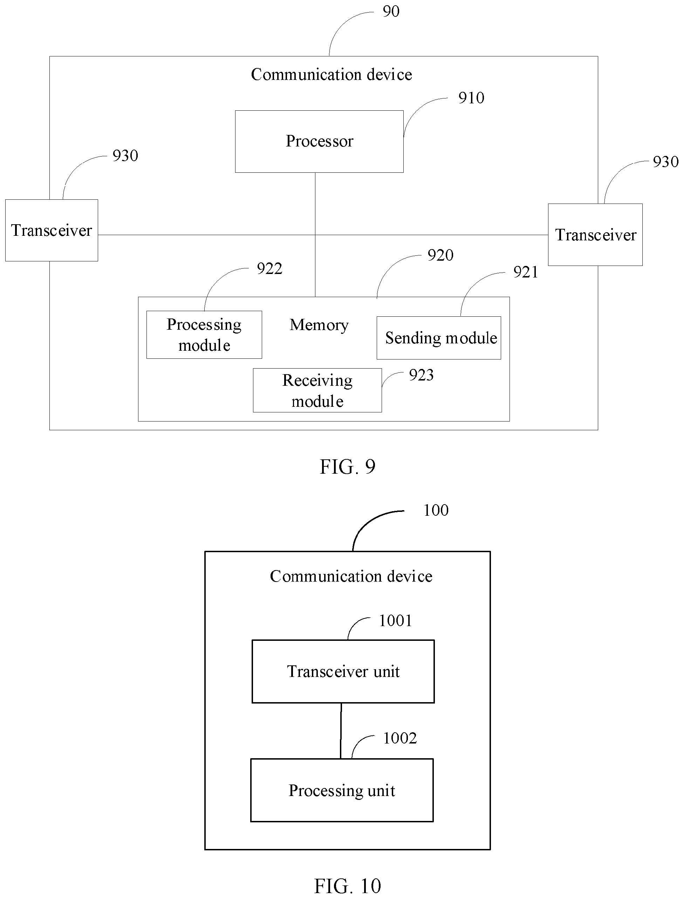

FIG. 9 is a schematic diagram of a structure of another communication device 90 according to this application. Both the mobility management entity in the method embodiment corresponding to FIG. 4 or FIG. 5 and the MME in the method embodiment corresponding to FIG. 6A and FIG. 6B or FIG. 7 may be based on the structure of the communication device 90 shown in FIG. 9 in this embodiment.

As shown in FIG. 9, the communication device 90 may include a processor 910, a memory 920, and a transceiver 930. The processor 910 is coupled to the memory 920, and the processor 910 is coupled to the transceiver 930.

The transceiver 930 may also be referred to as a transceiver unit, a transceiver device, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

The processor 910 may be a central processing unit, a network processor (network processor, NP), or a combination of a CPU and an NP. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor 910 may be one processor, or may include a plurality of processors.

In addition, the memory 920 is mainly configured to store a software program and data. The memory 920 may exist independently, and is connected to the processor 910. Optionally, the memory 920 and the processor 910 may be integrated, for example, integrated into one or more chips. The memory 920 can store program code for executing technical solutions in embodiments of this application, and the processor 910 controls execution of the program code. Various types of executed computer program code may also be considered as drivers of the processor 910. The memory 920 may include a volatile memory (volatile memory), for example, a random access memory (random-access memory, RAM). Alternatively, the memory may include a non-volatile memory (non-volatile memory), for example, a read-only memory (read-only memory, ROM), a flash memory (flash memory), a hard disk drive (hard disk drive, HDD), or a solid-state drive (solid-state drive, SSD). Alternatively, the memory 920 may include a combination of the foregoing types of memories. The memory 920 may be one memory, or may include a plurality of memories.

In an implementation, the memory 920 stores computer-readable instructions, and the computer-readable instructions include a plurality of software modules, for example, a sending module 921, a processing module 922, and a receiving module 923. After executing each software module, the processor 910 may perform a corresponding operation based on an indication of each software module. In this embodiment, an operation performed by a software module is actually an operation performed by the processor 910 based on an indication of the software module.

Specifically, the processing module 922 is configured to obtain indication information 013, and determine, based on the indication information 013, whether to send a user plane security policy 024 to an access network device that provides a service for a terminal device. The user plane security policy 024 indicates whether to enable user plane ciphering protection and/or whether to enable user plane integrity protection. The indication information 013 indicates whether the terminal device supports on-demand user plane security protection between the terminal device and an access network device.

In an optional implementation, the sending module 921 is configured to: when the indication information 013 indicates that the terminal device supports on-demand user plane security protection between the terminal device and an access network device, and a path switch request 034 carries no user plane security policy, send, to a target access network device, a path switch response 044 that carries the user plane security policy 024.

In an optional implementation, the sending module 921 is configured to: when the indication information 013 indicates that the terminal device supports on-demand user plane security protection between the terminal device and an access network device, send the user plane security policy 024 to a source access network device.

In an optional implementation, the processing module 922 is configured to: obtain indication information 051, where the indication information 051 indicates whether the access network device that provides a service for the terminal device supports on-demand user plane security protection between the access network device and the terminal device; and determine, based on the indication information 013 and the indication information 051, whether to send the user plane security policy 024 to the access network device that provides a service for the terminal device.

In an optional implementation, the sending module 921 is configured to: when the indication information 013 indicates that the terminal device supports on-demand user plane security protection, and the indication information 051 indicates that the access network device that provides a service for the terminal device supports on-demand user plane security protection between the access network device and the terminal device, send the user plane security policy 024 to the access network device.

In an optional implementation, the receiving module 923 is configured to receive subscription data of the terminal device from a home subscriber server; and the processing module 922 is configured to: when the indication information 013 indicates that the terminal device supports on-demand user plane security protection, and the subscription data includes the user plane security policy 024, store the user plane security policy 024.

In an optional implementation, the receiving module 923 is configured to receive subscription data of the terminal device from a home subscriber server; and the processing module 922 is configured to: when the indication information 013 indicates that the terminal device supports on-demand user plane security protection between the terminal device and an access network device, and the subscription data does not include a user plane security policy, determine the user plane security policy 024 according to a preconfigured user plane security policy 024-1, and store the user plane security policy 024 in a context of the terminal device.

In an optional implementation, the receiving module 923 is configured to receive subscription data of the terminal device from a home subscriber server; and the processing module 922 is configured to: when the indication information 013 indicates that the terminal device supports on-demand user plane security protection between the terminal device and an access network device, the indication information 051 indicates that the access network device supports on-demand user plane security protection between the access network device and the terminal device, and the subscription data includes the user plane security policy 024, store the user plane security policy 024.

In an optional implementation, the receiving module 923 is configured to receive subscription data of the terminal device from a home subscriber server; and the processing module 922 is configured to: when the indication information 013 indicates that the terminal device supports on-demand user plane security protection between the terminal device and an access network device, the indication information 051 indicates that the access network device supports on-demand user plane security protection between the access network device and the terminal device, and the subscription data does not include a user plane security policy, determine the user plane security policy 024 according to a preconfigured user plane security policy 024-2, and store the user plane security policy 024 in a context of the terminal device.

For other content, refer to the method for the mobility management entity or the MME in the embodiment of FIG. 4, FIG. 5, FIG. 6A and FIG. 6B, or FIG. 7. Details are not described herein again.

As shown in FIG. 10, an embodiment further provides a communication device 100. The communication device 100 may be an access network device or a chip in an access network device. The communication device 100 includes a transceiver unit 1001 and a processing unit 1002.

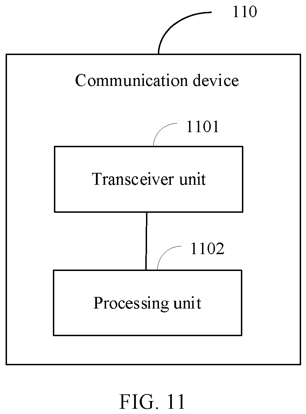

As shown in FIG. 11, an embodiment further provides a communication device 110. The communication device 110 may be a mobility management entity or a chip in a mobility management entity. The communication device 110 includes a transceiver unit 1101 and a processing unit 1102.

When the communication device 100 is an access network device or an eNB, and when the communication device 110 is a mobility management entity or an MME, the transceiver unit 1001 and the transceiver unit 1101 may be a sending unit or a transmitter when sending information, and the transceiver unit 1001 and the transceiver unit 1101 may be a receiving unit or a receiver when receiving information. The transceiver unit may be a transceiver, or a radio frequency circuit integrating a transmitter and a receiver. When the communication device 100 or the communication device 110 includes a storage unit, the storage unit is configured to store computer instructions. The processor is communicatively connected to the memory, and the processor executes the computer instructions stored in the memory, so that the access network device and the mobility management entity perform the methods in the method embodiments corresponding to FIG. 2, FIG. 4, and FIG. 5, and the eNB and the MME perform the methods in the embodiments corresponding to FIG. 3A and FIG. 3B, FIG. 6A and FIG. 6B, and FIG. 7. In addition, the processing unit 1002 and the processing unit 1102 may be a general-purpose central processing unit, a microprocessor, a digital signal processor (digital signal processor, DSP), or a micro controller unit (micro controller unit, MCU). The processor may be an independent semiconductor chip, or may be integrated into a semiconductor chip with another circuit. For example, the processor and another circuit (for example, a codec circuit, a hardware acceleration circuit, or various buses and interface circuits) may constitute a system-on-a-chip (system-on-a-chip, SoC), or the processor may be integrated into an application-specific integrated circuit ASIC as a built-in processor of the ASIC.

When the communication device 100 is a chip in an access network device, and when the communication device 110 is a chip in a mobility management entity, the transceiver unit 1001 and the transceiver unit 1101 may be an input and/or output interface, a pin, a circuit, or the like. In addition, the processing unit 1002 may be a processor of the chip in the access network device, and the processing unit 1102 may be a processor of the chip in the mobility management entity. The processor may execute computer-executable instructions stored in a storage unit, so that the chip in the access network device and the chip in the mobility management entity perform the methods in the embodiments corresponding to FIG. 2 to FIG. 7. Optionally, the storage unit is a storage unit in the chip, for example, a register or a buffer; or the storage unit may be a storage unit that is in the access network device or the mobility management entity and that is located outside the chip, for example, a read-only memory ROM, another type of static storage device capable of storing static information and instructions, or a random access memory RAM.

For example, for the communication device 100, the transceiver unit 1001 is configured to receive a message 001 from a source access network device, and send, to a mobility management entity, a path switch request 031 that carries a user plane security policy 021. The processing unit 1002 is configured to control the transceiver unit 1001 to receive the message 001 from the source access network device, where the message 001 includes indication information 011. In addition, when the indication information 011 indicates that a terminal device supports on-demand user plane security protection between the terminal device and an access network device, the processor 801 controls the transceiver unit 1001 to send, to the mobility management entity, the path switch request 031 that carries the user plane security policy 021, where the user plane security policy 021 indicates whether to enable user plane ciphering protection and/or whether to enable user plane integrity protection.

For example, the processing unit 1002 is further configured to: when the indication information 011 indicates that the terminal device does not support on-demand user plane security protection between the terminal device and an access network device, control the transceiver unit 1001 to send, to the mobility management entity, a path switch request 033 that carries no user plane security policy, where the path switch request 033 carries the indication information 011.

For example, the processing unit 1002 is further configured to: when a current user plane security activation status of the terminal device does not match the user plane security policy 022, enable or skip enabling user plane ciphering protection and/or user plane integrity protection for the terminal device according to the user plane security policy 022, where the current user plane security activation status is a status of whether user plane ciphering protection and/or user plane integrity protection are currently enabled between a target access network device and the terminal device.

For other content, refer to the method for the target access network device or the target eNB in the embodiment of FIG. 2 or FIG. 3A and FIG. 3B. Details are not described herein again.

For example, for the communication device 110, the processing unit 1102 is configured to obtain indication information 013, and determine, based on the indication information 013, whether to send a user plane security policy 024 to an access network device that provides a service for a terminal device. The user plane security policy 024 indicates whether to enable user plane ciphering protection and/or whether to enable user plane integrity protection. The indication information 013 indicates whether the terminal device supports on-demand user plane security protection between the terminal device and an access network device.

For example, the transceiver unit 1101 is configured to: when the indication information 013 indicates that the terminal device supports on-demand user plane security protection between the terminal device and an access network device, and a path switch request 034 carries no user plane security policy, send, to a target access network device, a path switch response 044 that carries the user plane security policy 024.

For example, the transceiver unit 1101 is configured to: when the indication information 013 indicates that the terminal device supports on-demand user plane security protection between the terminal device and an access network device, send the user plane security policy 024 to a source access network device.

For other content, refer to the method for the mobility management entity or the MME in the embodiment of FIG. 4, FIG. 5, FIG. 6A and FIG. 6B, or FIG. 7. Details are not described herein again.

It should be understood that the access network device may include functional units (means) corresponding to steps of a method or a process of the access network device, and the mobility management entity may include functional units corresponding to steps of a method or a process of the mobility management entity. One or more of the foregoing modules or units may be implemented by using software, hardware, or a combination thereof. When any one of the foregoing modules or units is implemented by using software, the software exists in a form of computer program instructions, and is stored in a memory, and a processor may be configured to execute the program instructions to implement the foregoing method processes.

According to the methods provided in embodiments of this application, an embodiment of this application further provides a communication system. The communication system includes a terminal device, an access network device, and a mobility management entity. For a structure of the access network device, refer to the communication device 80 in the embodiment corresponding to FIG. 8. For a structure of the mobility management entity, refer to the communication device 90 in the embodiment corresponding to FIG. 9. In addition, when the access network device is a chip, for the access network device, refer to the communication device 100 in the embodiment corresponding to FIG. 10; and when the mobility management entity is a chip, for the mobility management entity, refer to the communication device 110 in the embodiment corresponding to FIG. 11.

During implementation, steps in the foregoing methods may be performed by an integrated logic circuit of hardware in a processor or through instructions in a form of software. The steps of the methods disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and a processor reads information in the memory and performs the steps in the foregoing methods based on hardware of the processor. To avoid repetition, details are not described herein again. It should be further understood that the "first", "second", "third", "fourth", and various numbers in this specification are merely used for differentiation for ease of description, and are not intended to limit the scope of embodiments of this application.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

It can be clearly understood by persons skilled in the art that, for ease and brevity of description, for a detailed operating process of the foregoing system, apparatus, and unit, reference may be made to a corresponding process in the foregoing method embodiments, and details are not described herein again.

The foregoing embodiments are merely intended for describing the technical solutions of this application rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A security policy processing method, comprising:
receiving, by a target access network device, a message 001 from a source access network device, wherein the message 001 comprises indication information 011; and
when the indication information 011 indicates that a terminal device supports on-demand user plane security protection between the terminal device and an access network device, sending, by the target access network device to a mobility management entity, a path switch request 031 that carries a user plane security policy 021, wherein the user plane security policy 021 indicates whether to enable user plane ciphering protection and/or whether to enable user plane integrity protection.

2. The method according to claim 1, wherein the access network device is an evolved NodeB eNB.

3. The method according to claim 1 or 2, wherein when the target access network device does not receive a user plane security policy from the source access network device, the user plane security policy 021 is a user plane security policy 021-1 constructed by the target access network device.

4. The method according to claim 3, wherein the method further comprises:
determining, by the target access network device, that a user plane security activation status between the target access network device and the terminal device is that user plane ciphering protection is enabled and user plane integrity protection is not enabled; and
constructing, by the target access network device, the user plane security policy 021-1 that matches the user plane security activation status.

5. The method according to claim 3 or 4, wherein the user plane security policy 021-1 comprises a user plane ciphering protection policy and a user plane integrity protection policy, the user plane ciphering protection policy indicates that enabling is required or enabling is preferred, and the user plane integrity protection policy indicates that enabling is not needed or enabling is preferred.

6. The method according to claim 1 or 2, wherein when the target access network device does not receive a user plane security policy from the source access network device, the user plane security policy 021 is a user plane security policy 021-2 preconfigured on the target access network device.

7. The method according to claim 6, wherein the message 001 further comprises identifiers of N evolved radio access bearers of the terminal device, and N is an integer greater than or equal to 1; and
the path switch request 031 further comprises the identifiers of the N evolved radio access bearers.

8. The method according to claim 7, wherein the path switch request 031 comprises N user plane security policies 021-2, and each of the identifiers of the N evolved radio access bearers corresponds to one of the N user plane security policies 021-2.

9. The method according to any one of claims 1 to 8, wherein after the sending, by the target access network device to a mobility management entity, a path switch request 031 that carries a user plane security policy 021, the method further comprises:
receiving, by the target access network device, a path switch response 041 from the mobility management entity, wherein the path switch response 041 carries a user plane security policy 022; and
storing, by the target access network device, the user plane security policy 022 in a context of the terminal device.

10. The method according to claim 9, wherein the method further comprises:
if a current user plane security activation status of the terminal device does not match the user plane security policy 022, enabling or skipping enabling, by the target access network device, user plane ciphering protection and/or user plane integrity protection for the terminal device according to the user plane security policy 022, wherein the current user plane security activation status is a status of whether user plane ciphering protection and/or user plane integrity protection are currently enabled between the target access network device and the terminal device.

11. The method according to claim 1, wherein the method further comprises:
when the indication information 011 indicates that the terminal device does not support on-demand user plane security protection between the terminal device and an access network device, sending, by the target access network device to the mobility management entity, a path switch request 032 that carries no user plane security policy; and
receiving, by the target access network device from the mobility management entity, a path switch response 042 that carries no user plane security policy.

12. The method according to claim 1, wherein the method further comprises:
when the indication information 011 indicates that the terminal device does not support on-demand user plane security protection between the terminal device and an access network device, sending, by the target access network device to the mobility management entity, a path switch request 033 that carries no user plane security policy, wherein the path switch request 033 carries the indication information 011;
receiving, by the target access network device from the mobility management entity, a path switch response 043 that carries a user plane security policy 023; and
storing, by the target access network device, the user plane security policy 023 in a context of the terminal device.

13. The method according to claim 12, wherein the path switch response 043 carrying the user plane security policy 023 further carries indication information 012, and the indication information 012 indicates that the terminal device supports on-demand user plane security protection between the terminal device and an access network device.

14. The method according to claim 12 or 13, wherein the method further comprises:
if a current user plane security activation status of the terminal device does not match the user plane security policy 023, enabling or skipping enabling, by the target access network device, user plane ciphering protection and/or user plane integrity protection for the terminal device according to the user plane security policy 023, wherein the current user plane security activation status is a status of whether user plane ciphering protection and/or user plane integrity protection are currently enabled between the target access network device and the terminal device.

15. The method according to any one of claims 1 to 14, wherein the indication information 011 is represented by a part of bits of an evolved packet system security capability of the terminal device, and the evolved packet system security capability of the terminal device indicates at least one security algorithm supported by the terminal device.

16. The method according to any one of claims 1 to 15, wherein the message 001 is a handover request or a context retrieve response.

17. A communication device, comprising:
a receiving module, configured to receive a message 001 from a source access network device, wherein the message 001 comprises indication information 011; and
a processing module, configured to: when the indication information 011 indicates that a terminal device supports on-demand user plane security protection between the terminal device and an access network device, control a sending module to send, to a mobility management entity, a path switch request 031 that carries a user plane security policy 021, wherein the user plane security policy 021 indicates whether to enable user plane ciphering protection and/or whether to enable user plane integrity protection.

18. The communication device according to claim 17, wherein the access network device is an evolved NodeB eNB.

19. The communication device according to claim 17 or 18, wherein when the communication device does not receive a user plane security policy from the source access network device, the user plane security policy 021 is a user plane security policy 021-1 constructed by the communication device.

20. The communication device according to claim 19, wherein the processing module is further configured to:
determine that a user plane security activation status between the access network device and the terminal device is that user plane ciphering protection is enabled and user plane integrity protection is not enabled; and
construct the user plane security policy 021-1 that matches the user plane security activation status.

21. The communication device according to claim 19 or 20, wherein the user plane security policy 021-1 comprises a user plane ciphering protection policy and a user plane integrity protection policy, the user plane ciphering protection policy indicates that enabling is required or enabling is preferred, and the user plane integrity protection policy indicates that enabling is not needed or enabling is preferred.

22. The communication device according to claim 17 or 18, wherein when the communication device does not receive a user plane security policy from the source access network device, the user plane security policy 021 is a user plane security policy 021-2 preconfigured on the communication device.

23. The communication device according to claim 22, wherein the message 001 further comprises identifiers of N evolved radio access bearers of the terminal device, and N is an integer greater than or equal to 1; and
the path switch request 031 further comprises the identifiers of the N evolved radio access bearers.

24. The communication device according to claim 23, wherein the path switch request 031 comprises N user plane security policies 021-2, and each of the identifiers of the N evolved radio access bearers corresponds to one of the N user plane security policies 021-2.

25. The communication device according to any one of claims 17 to 24, wherein
the receiving module is further configured to receive a path switch response 041 from the mobility management entity, wherein the path switch response 041 carries a user plane security policy 022; and
the communication device further comprises a storage module, wherein
the storage module is configured to store the user plane security policy 022 in a context of the terminal device.

26. The communication device according to claim 25, wherein the processing module is further configured to:
when a current user plane security activation status of the terminal device does not match the user plane security policy 022, enable or skip enabling user plane ciphering protection and/or user plane integrity protection for the terminal device according to the user plane security policy 022, wherein the current user plane security activation status is a status of whether user plane ciphering protection and/or user plane integrity protection are currently enabled between a target access network device and the terminal device.

27. The communication device according to claim 17, wherein
the sending module is further configured to:
when the indication information 011 indicates that the terminal device does not support on-demand user plane security protection between the terminal device and an access network device, send, to the mobility management entity, a path switch request 032 that carries no user plane security policy; and
the receiving module is further configured to receive, from the mobility management entity, a path switch response 042 that carries no user plane security policy.

28. The communication device according to claim 17, wherein
the sending module is further configured to:
when the indication information 011 indicates that the terminal device does not support on-demand user plane security protection between the terminal device and an access network device, send, to the mobility management entity, a path switch request 033 that carries no user plane security policy, wherein the path switch request 033 carries the indication information 011;
the receiving module is further configured to receive, from the mobility management entity, a path switch response 043 that carries a user plane security policy 023; and
the communication device further comprises a storage module, wherein
the storage module is configured to store the user plane security policy 023 in a context of the terminal device.

29. The communication device according to claim 28, wherein the path switch response 043 carrying the user plane security policy 023 further carries indication information 012, and the indication information 012 indicates that the terminal device supports on-demand user plane security protection between the terminal device and an access network device.

30. The communication device according to claim 28 or 29, wherein the processing module is further configured to:
when a current user plane security activation status of the terminal device does not match the user plane security policy 023, enable or skip enabling user plane ciphering protection and/or user plane integrity protection for the terminal device according to the user plane security policy 023, wherein the current user plane security activation status is a status of whether user plane ciphering protection and/or user plane integrity protection are currently enabled between a target access network device and the terminal device.

31. The communication device according to any one of claims 17 to 30, wherein the indication information 011 is represented by a part of bits of an evolved packet system security capability of the terminal device, and the evolved packet system security capability of the terminal device indicates at least one security algorithm supported by the terminal device.

32. The communication device according to any one of claims 17 to 31, wherein the message 001 is a handover request or a context retrieve response.

33. A communication device, wherein the communication device comprises a processor, a memory, and a transceiver, the memory stores program code, and the processor is configured to invoke the program code stored in the memory, to perform the following operations:
controlling the transceiver to receive a message 001 from a source access network device, wherein the message 001 comprises indication information 011; and
when the indication information 011 indicates that a terminal device supports on-demand user plane security protection between the terminal device and an access network device, controlling the transceiver to send, to a mobility management entity, a path switch request 031 that carries a user plane security policy 021, wherein the user plane security policy 021 indicates whether to enable user plane ciphering protection and/or whether to enable user plane integrity protection.

34. The communication device according to claim 33, wherein the access network device is an evolved NodeB eNB.

35. The communication device according to claim 33 or 34, wherein when the communication device does not receive a user plane security policy from the source access network device, the user plane security policy 021 is a user plane security policy 021-1 constructed by the communication device.

36. The communication device according to claim 35, wherein the processor is further configured to:
determine that a user plane security activation status between the access network device and the terminal device is that user plane ciphering protection is enabled and user plane integrity protection is not enabled; and
construct the user plane security policy 021-1 that matches the user plane security activation status.

37. The communication device according to claim 35 or 36, wherein the user plane security policy 021-1 comprises a user plane ciphering protection policy and a user plane integrity protection policy, the user plane ciphering protection policy indicates that enabling is required or enabling is preferred, and the user plane integrity protection policy indicates that enabling is not needed or enabling is preferred.

38. The communication device according to claim 33 or 34, wherein when the communication device does not receive a user plane security policy from the source access network device, the user plane security policy 021 is a user plane security policy 021-2 preconfigured on the communication device.

39. The communication device according to claim 38, wherein the message 001 further comprises identifiers of N evolved radio access bearers of the terminal device, and N is an integer greater than or equal to 1; and
the path switch request 031 further comprises the identifiers of the N evolved radio access bearers.

40. The communication device according to claim 39, wherein the path switch request 031 comprises N user plane security policies 021-2, and each of the identifiers of the N evolved radio access bearers corresponds to one of the N user plane security policies 021-2.

41. The communication device according to any one of claims 33 to 40, wherein the processor is further configured to:
control the transceiver to receive a path switch response 041 from the mobility management entity, wherein the path switch response 041 carries a user plane security policy 022; and
store the user plane security policy 022 in a context of the terminal device.

42. The communication device according to claim 41, wherein the processor is further configured to:
when a current user plane security activation status of the terminal device does not match the user plane security policy 022, enable or skip enabling user plane ciphering protection and/or user plane integrity protection for the terminal device according to the user plane security policy 022, wherein the current user plane security activation status is a status of whether user plane ciphering protection and/or user plane integrity protection are currently enabled between a target access network device and the terminal device.

43. The communication device according to claim 33, wherein the processor is further configured to:
when the indication information 011 indicates that the terminal device does not support on-demand user plane security protection between the terminal device and an access network device, control the transceiver to send, to the mobility management entity, a path switch request 032 that carries no user plane security policy; and
control the transceiver to receive, from the mobility management entity, a path switch response 042 that carries no user plane security policy.

44. The communication device according to claim 33, wherein the processor is further configured to:
when the indication information 011 indicates that the terminal device does not support on-demand user plane security protection between the terminal device and an access network device, control the transceiver to send, to the mobility management entity, a path switch request 033 that carries no user plane security policy, wherein the path switch request 033 carries the indication information 011;
control the transceiver to receive, from the mobility management entity, a path switch response 043 that carries a user plane security policy 023; and
store the user plane security policy 023 in a context of the terminal device.

45. The communication device according to claim 44, wherein the path switch response 043 carrying the user plane security policy 023 further carries indication information 012, and the indication information 012 indicates that the terminal device supports on-demand user plane security protection between the terminal device and an access network device.

46. The communication device according to claim 44 or 45, wherein the processor is further configured to:
when a current user plane security activation status of the terminal device does not match the user plane security policy 023, enable or skip enabling user plane ciphering protection and/or user plane integrity protection for the terminal device according to the user plane security policy 023, wherein the current user plane security activation status is a status of whether user plane ciphering protection and/or user plane integrity protection are currently enabled between a target access network device and the terminal device.

47. The communication device according to any one of claims 33 to 46, wherein the indication information 011 is represented by a part of bits of an evolved packet system security capability of the terminal device, and the evolved packet system security capability of the terminal device indicates at least one security algorithm supported by the terminal device.

48. The communication device according to any one of claims 33 to 47, wherein the message 001 is a handover request or a context retrieve response.

49. A computer-readable storage medium, wherein the computer-readable storage medium stores instructions, and when the instructions run on a computer, the computer is enabled to perform the method according to any one of claims 1 to 16.

50. A computer program product comprising instructions, wherein when the instructions run on a computer, the computer is enabled to perform the method according to any one of claims 1 to 16.

51. A communication system, comprising:
a mobility management entity and the communication device according to any one of claims 17 to 32.

52. The communication system according to claim 51, wherein the communication system further comprises a source access network device and/or a terminal device.
